(19) **Europäisches Patentamt / European Patent Office / Office européen des brevets**

(11) **EP 1 839 748 B1**

(12) **EUROPEAN PATENT SPECIFICATION**

(45) Date of publication and mention
of the grant of the patent:
**08.05.2013 Bulletin 2013/19**

(51) Int Cl.:
*B01J 35/04* (2006.01)   *B01D 46/24* (2006.01)
*B01D 53/94* (2006.01)   *B01J 23/42* (2006.01)
*B01J 23/46* (2006.01)   *B01J 23/63* (2006.01)
*B01J 37/00* (2006.01)   *C04B 38/00* (2006.01)
*B01J 37/02* (2006.01)   *F01N 3/02* (2006.01)

(21) Application number: **07251367.4**

(22) Date of filing: **29.03.2007**

(54) **Honeycomb catalytic body**

Wabenförmiger katalytischer Körper

Corps catalytique en nid d'abeille

(84) Designated Contracting States:
**DE FR**

(30) Priority: **31.03.2006 JP 2006098932**
**23.02.2007 JP 2007044533**

(43) Date of publication of application:
**03.10.2007 Bulletin 2007/40**

(73) Proprietor: **NGK Insulators, Ltd.**
**Nagoya-shi, Aichi 467-8530 (JP)**

(72) Inventors:
• **Miyairi, Yukio,**
**c/o Legal Affairs and Intellectual Prop.**
**Nagoya City**
**Aichi-ken, 467-8530 (JP)**

• **Noda, Naomi,**
**c/o Legal Affairs and Intellectual Prop.**
**Nagoya City**
**Aichi-ken, 467-8530 (JP)**
• **Makino, Mikio,**
**c/o Legal Affairs and Intellectual Prop.**
**Nagoya City**
**Aichi-ken, 467-8530 (JP)**

(74) Representative: **Paget, Hugh Charles Edward et al**
**Mewburn Ellis LLP**
**33 Gutter Lane**
**London**
**EC2V 8AS (GB)**

(56) References cited:
**EP-A- 1 293 241      EP-A1- 0 736 503**
**EP-A1- 1 408 208      WO-A-2007/026803**
**JP-A- 2005 262 210    US-A- 4 428 758**

**Description**

BACKGROUND OF THE INVENTION

1. Field of the Invention

The present invention relates to a honeycomb structure and a honeycomb catalytic body for preferable use in purification of unpurified components such as carbon monoxide (CO), hydrocarbon (HC), nitrogen oxide ($NO_x$) and sulfur oxide ($SO_x$) included in exhaust gases discharged from fixed engines, combustion devices and the like for cars, construction machines and industries.

2. Description of the Related Art

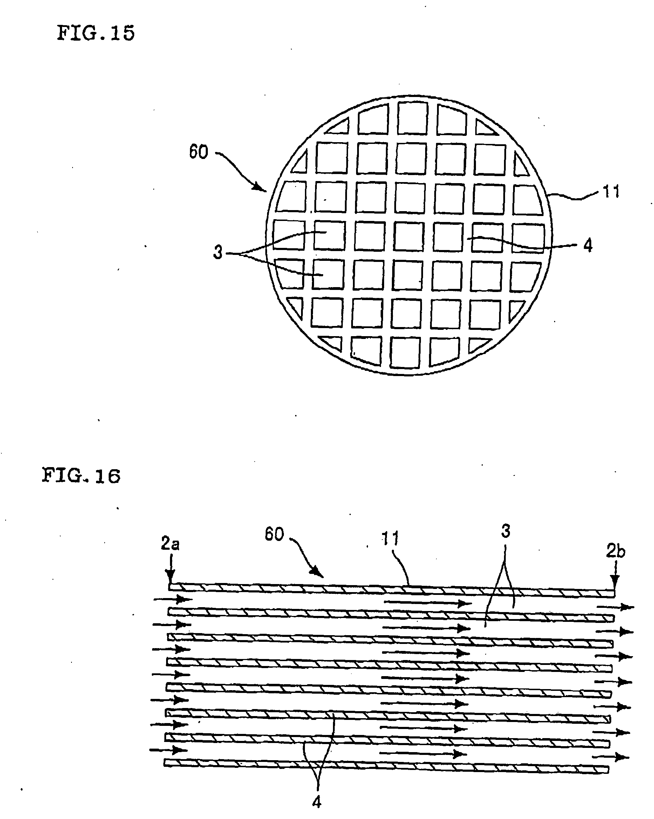

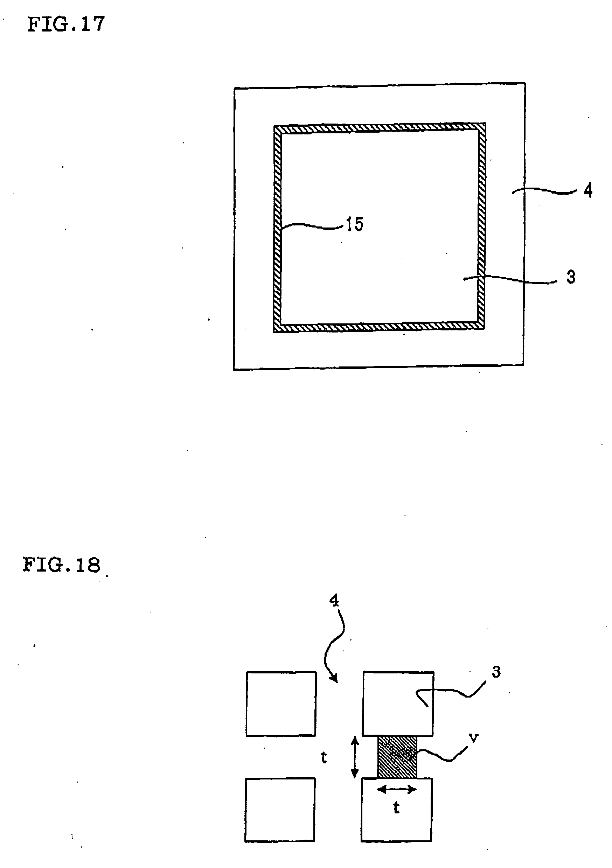

At present, a catalytic body of a honeycomb structure (a honeycomb catalytic body) has been used in purifying exhaust gases discharged from various engines and the like. As shown in FIG. 17, this honeycomb catalytic body has a structure in which a catalytic layer 15 is carried by the surface of a partition wall 4 constituting a cell (a channel) 3. As shown in FIGS. 15, 16, to purify the exhaust gas by use of a honeycomb catalytic body 60 (a honeycomb structure 11), the exhaust gas is passed through the cells 3 of the honeycomb catalytic body 60 from one end surface 2a side, brought into contact with a catalytic layer (not shown) on the surfaces of the partition walls 4, and then discharged from the honeycomb catalytic body from the other end surface 2b (see, e.g., JP-A-2003-33664).

Moreover, as a diesel particulate filter (DPF) for trapping particles included in the exhaust gas of a diesel engine, a wall flow type filter is broadly used which is constituted by alternately plugging the cells of the honeycomb structure on opposite end surfaces of the honeycomb structure (so that the end surfaces of the honeycomb structure usually have a checkered pattern). In consequence, the exhaust gas which has entered the structure from one end surface passes through porous partition walls constituting filter layers and is discharged from the other end surface (see, e.g., JP-A-2001-269585).

Furthermore, as an improvement of such a filter, a ceramic honeycomb filter is known which has a cell having two or more plugging portions in a length direction (a channel direction) of the cell and a cell adjacent to the cell and having at least a plugging portion between the plugging portions in the length direction of the cell (see, e.g., JP-A-2005-262210). In this filter, the exhaust gas which has entered the cells passes through the partition wall a plurality of times until the exhaust gas is discharged from the cells. Therefore, the filter has an advantage that an effect of trapping particulate matters improves.

In recent years, the present inventors have intensively investigated a wall flow structure of the filter so as to apply the structure to the above honeycomb catalytic body. That is, attempts have been made to plug the cells of the above catalytic body of the honeycomb structure as in the above filter, pass the exhaust gas through the porous partition walls having a large number of pores and bring the exhaust gas into contact with the catalytic layer carried on inner surfaces of the pores of the partition walls during the passage of the gas, thereby purifying the exhaust gas.

Especially, in a case where the structure in which the exhaust gas passes through the partition wall a plurality of times can be applied to the honeycomb catalytic body as in the filter described in Patent Document 3, effects such as improvement of a contact efficiency between the exhaust gas and the catalytic layer, reduction of an amount of a catalyst (noble metal) for use due to the improvement of the contact efficiency and increase of catalyst life can be expected.

However, in a case where the wall flow structure is applied to the honeycomb catalytic body in this manner, it is not sufficient to form the catalytic layer on the honeycomb structure in which the cells are simply plugged as in the above filter. A partition wall pore characteristic and the like need to be studied again so as to adapt the characteristic and the like to the catalytic body.

That is, in the filter, from a viewpoint of trapping the particulate matters, an appropriate pore characteristic and the like are derived in consideration of particle diameters of the particulate matters, a pressure loss in a case where the particulate matters are deposited and the like, and a large heat capacity to a certain degree is required for preventing a dissolved loss due to combustion heat during regeneration of the filter (treatment to burn and remove carbon particulates deposited in the filter). On the other hand, in the honeycomb catalytic body, from a viewpoint of increasing the contact efficiency between the catalytic layer carried mainly in the pores of the partition walls and the exhaust gas, the appropriate pore characteristic and the like need to be derived in consideration of balances of requirements that pore surface areas and pore volumes should be increased; foreign matters such as ashes should not remain in the honeycomb catalytic body; the heat capacity should be small so as to ignite the catalyst at an early stage; strength should be maintained; and rise of the pressure loss should be suppressed on conditions that any carbon particulate is not deposited. Therefore, a difference between the filter and the honeycomb catalytic body is naturally made in the appropriate pore characteristic, especially an average maximum image distance of the partition walls.

EP 0736503 describes an exhaust gas-purifying filter in the form of a honey comb having plugs at ends of the cells and a catalyst-supporting coating layer on the partition walls. The average pore size of the pores of the partition walls is 20-40 $\mu$m, and the average pore size of the coating layer is 10-60 $\mu$m.

SUMMARY OF THE INVENTION

The present invention has been developed in view of such conventional situations, and an object of the present invention is to provide a honeycomb catalytic body to which a wall flow structure where a fluid such as an exhaust gas passes through a partition wall twice or more is applied and in which characteristics of pores and the like and provide a honeycomb structure for use as a catalyst carrier of the honeycomb catalytic body. Specifically, the object of the present invention is to provide a honeycomb catalytic body and a honeycomb structure in which characteristics of pores and the like are appropriately adjusted as characteristics for the catalytic body.

To achieve the above object, according to the present invention, the following honeycomb catalytic body is provided.

A honeycomb catalytic body as set out in claim 1.

The honeycomb catalytic body according to the above [1], at least a part of which is constituted by alternately arranging a cell including two or more arranged plugging portions and a cell disposed adjacent to the cell and including a plugging portion disposed at an intermediate position between the plugging portions in the length direction of the cell or a position where a distance from the intermediate position is 30% or less of a distance between the plugging portions.

The honeycomb catalytic body according to any one of the above [1] or [2], wherein at least a part of the plugging portions have a through hole which extends through the cell in the length direction of the cell; and a sectional area of the through hole is 30 to 90% of that of the cell.

The honeycomb catalytic body according to any one of the above [1] to [3], wherein the average maximum image distance of the plugging portions is 200 $\mu$m or more.

The honeycomb catalytic body according to any one of the above [1] to [4], wherein a difference of a porosity between a portion close to the one end surface of the honeycomb structure and a portion close to the other end surface is 5% or more.

The honeycomb catalytic body according to any one of the above [1] to [5], wherein a bulk density of the honeycomb structure is 0.5 g/cm$^3$ or less.

The honeycomb catalytic body according to any one of the above [1] to [6], wherein more plugging portions are arranged in the cell positioned at the central portion of the honeycomb structure in a diametric direction than in the cell positioned at an outer peripheral portion of the honeycomb structure.

The honeycomb catalytic body according to any one of the above [1] to [7], wherein an amount of the catalytic layer to be carried per unit volume of the honeycomb structure is in a range of 10 to 250 g/L.

The honeycomb catalytic body according to any one of the above [1] to [9], wherein the catalytic layer is also carried by the plugging portions.

The honeycomb catalytic body according to any one of the above [1] to [9], wherein the amount of the catalytic layer to be carried per unit volume of the honeycomb structure at the portion close to the other end surface of the honeycomb structure is 5% or more larger than that at the portion close to the one end surface of the honeycomb structure.

The honeycomb catalytic body according to any one of the above [1] to [9], wherein the amount of the catalytic layer to be carried per unit volume of the honeycomb structure at the portions close to the opposite end surfaces is 5% or more larger than that at the center of the honeycomb structure in the length direction.

Use of the honeycomb catalytic body according to any one of the above [1] to [11], as a catalytic body to purify an exhaust gas which does not substantially include any carbon particulate.

Use of the honeycomb catalytic body according to any one of the above [1] to [11], as a catalytic body to purify an exhaust gas discharged from a gasoline engine.

Use of the honeycomb catalytic body according to any one of the above [9] to [14], as a catalytic body to purify an exhaust gas discharged from an industrial combustion apparatus.

Use, in combination, of the honeycomb catalytic body according to any one of the above [1] to [11] and a filter, the catalytic body being used to purify an exhaust gas from which particulate matters have been removed by the filter, wherein the honeycomb catalytic body is disposed on a downstream side of the filter which removes the particulate matters from a dust-containing gas.

Use of the combination according to the above [15], wherein the filter is a diesel particulate filter.

In combination, the honeycomb catalytic body according to any one of the above [1] to [11] and another catalytic body, the honeycomb catalytic body being disposed on the downstream side of another catalytic body.

In a case where the honeycomb structure is used as the catalyst carrier of the honeycomb catalytic body of the present invention, since the honeycomb structure is structured so that the exhaust gas passes through the partition walls a plurality of times, a contact efficiency between the exhaust gas and the catalytic layer improves, an amount of a catalyst (a noble metal) for use can be reduced owing to the improvement of the contact efficiency, and further life of the catalyst lengthens. According to the honeycomb catalytic body of the present invention, the above honeycomb structure is used as the catalyst carrier of the honeycomb catalytic body. Therefore, a high contact efficiency between the exhaust gas and the catalytic layer is obtained, a high purifying effect is exhibited even when the amount of the catalyst (the noble metal) for use is small, and further the life of the honeycomb catalytic body as the catalyst is long.

BRIEF DESCRIPTION OF THE DRAWINGS

FIG. 1 is a schematic sectional view showing an example of an embodiment of a honeycomb structure according to the present invention;
FIG. 2 is a schematic sectional view showing an example of the embodiment of the honeycomb structure according to the present invention;
FIG. 3 is a schematic sectional view showing an example of the embodiment of the honeycomb structure according to the present invention;
FIG. 4 is a schematic sectional view showing an example of the embodiment of the honeycomb structure according to the present invention;
FIG. 5 is a schematic sectional view showing an example of the embodiment of the honeycomb structure according to the present invention;
FIG. 6 is a schematic sectional view showing an example of the embodiment of the honeycomb structure according to the present invention;
FIG. 7 is a schematic sectional view showing an example of the embodiment of the honeycomb structure according to the present invention;
FIG. 8 is a schematic sectional view showing an example of the embodiment of the honeycomb structure according to the present invention;
FIG. 9 is a schematic sectional view showing an example of the embodiment of the honeycomb structure according to the present invention;
FIG. 10 is a schematic sectional view showing an example of the embodiment of the honeycomb structure according to the present invention;
FIG. 11 is a schematic sectional view showing an example of the embodiment of the honeycomb structure according to the present invention;
FIG. 12 is a schematic sectional view showing an example of the embodiment of the honeycomb structure according to the present invention;
FIG. 13 is a schematic sectional view showing an example of the embodiment of the honeycomb structure according to the present invention;
FIG. 14 is a schematic sectional view showing configurations of honeycomb structures according to Comparative Examples 2 to 4;
FIG. 15 is a schematic front view schematically showing one embodiment of a conventional honeycomb catalytic body;
FIG. 16 is a schematic sectional view schematically showing the embodiment of the conventional honeycomb catalytic body;
FIG. 17 is a partially enlarged view schematically showing the embodiment of the conventional honeycomb catalytic body;
FIG. 18 is a plan view schematically showing a partially enlarged end surface of a honeycomb structure according to one embodiment of the present invention;
FIG. 19 is an SEM photograph of a honeycomb structure showing the end surface of the honeycomb structure according to the embodiment of the present invention; and
FIG. 20 is a schematic sectional view showing an example of the embodiment of the honeycomb structure according to the present invention.

DESCRIPTION OF THE PREFERRED EMBODIMENTS

The best mode for carrying out the present invention will hereinafter be described, but it should be understood that the present invention is not limited to the following embodiments and that the present invention includes the following embodiments to which modifications, improvements and the like have been applied based on ordinary knowledge of any person skilled in the art without departing from the scope of the present invention

As described above, a honeycomb structure of the present invention is a honeycomb structure including porous partition walls arranged so as to form a plurality of cells which communicate between two end surfaces of the honeycomb structure and having a large number of pores; and plugging portions arranged so as to plug at least a part of the plurality of cells at any position in a length direction of the cells. Main characteristics of the honeycomb structure lie in that an average maximum image distance of the partition walls is larger than 40 $\mu$m, and the plugging portions are arranged so that at least a part of a fluid which has entered the cells from one end surface passes through the partition wall twice or more, and is then discharged from the other end surface.

Such a honeycomb structure is used as a catalyst carrier, and a catalyst-containing catalytic layer is carried on at least inner surfaces of the pores of the partition walls to constitute a honeycomb catalytic body for purifying an exhaust gas. In this case, when the exhaust gas passes through the partition walls, the exhaust gas comes into contact with the catalyst included in the catalytic layer, and harmful components included in the exhaust gas are purified (safened). In addition, at least a part of the exhaust gas passes through the partition wall twice or more from a time when the gas enters the cells until the gas is discharged from the cells. Therefore, a contact efficiency between the exhaust gas and the catalyst improves, and a high purification capability is obtained.

Furthermore, since the contact efficiency between the exhaust gas and the catalyst improves in this manner, a necessary purification capability can be secured with a less amount of the catalyst (a noble metal, etc.) than in a conventional honeycomb catalytic body. Therefore, an amount of the catalyst for use can be reduced to reduce cost.

Moreover, in such a honeycomb catalytic body, the catalyst positioned on an upstream side easily deteriorates (thermally deteriorates, poisonously deteriorates). However, even in a case where the catalyst included in the catalytic layer carried on the inner surfaces of the pores of a portion of the partition walls where the exhaust gas first passes deteriorates, if the catalyst included in the catalytic layer carried on the inner surfaces of the pores of a further downstream portion of the partition walls where the gas passes for the second and subsequent times does not deteriorate, the exhaust gas can be purified to a certain degree by the catalyst that does not deteriorate. Therefore, durability and life of the catalytic body extend.

Furthermore, in the present invention, the average maximum image distance of the partition walls in the range 40 $\mu$m to 150 $\mu$m. This is defined in consideration of balances of various requirements required for the catalyst carrier for the honeycomb catalytic body. In order to carry a sufficient amount of the catalytic layer on the inner surfaces of the pores and improve the contact efficiency between the exhaust gas and the catalyst, the requirements include requirements that a pore inner surface area and a pore volume should be increased, foreign matters such as ashes should be prevented from being easily left in the pores, a heat capacity should be reduced to improve a warm-up property, a necessary strength should be maintained and a rise of a pressure loss should be suppressed. When the average maximum image distance of the partition walls is set to the above range, an appropriate balance for the catalyst carrier can be obtained.

If the average maximum image distance of the partition walls is 40 $\mu$m or less, a problem of pressure loss becomes serious. That is, the pressure loss increases, and this raises a problem during an operation of an engine under not only a large load but also a small load. On the other hand, if the average maximum distance exceeds 3000 $\mu$m, it tends to be difficult to sufficiently secure a contact area between the exhaust gas and the catalytic layer carried on the inner surfaces of the pores of the partition walls. Therefore, it is preferable to set the average maximum image distance of the partition walls to 3000 $\mu$m or less.

When the average maximum image distance of the partition walls is set to be above 40 $\mu$m to 150 $\mu$m or less, there is an advantage that a sufficient catalytic layer carrying area is easily secured even in a case where an amount of the catalytic layer to be carried increases to, for example, 30 g/L or more. Furthermore, when this is specifically investigated from a practical viewpoint, it is especially chosen to regard the strength as important and set the average maximum image distance to 40 to 150 $\mu$m in a case where the partition walls have a small thickness (500 $\mu$m or less). When the partition wall thickness is in a range of 100 to 500 $\mu$m, it is preferable to judge an appropriate average maximum image distance, depending on whether the strength or the pressure loss is regarded as important in accordance with an application or the like. For example, when the honeycomb structure is applied to cars, a running property and fuel consumption are regarded as important.

A "pore diameter" mentioned in the present specification is a physical value which is measured by image analysis. Specifically, assuming that a partition wall thickness is "t", at least 20 view fields each of length $\times$ breadth = t $\times$ t are observed in an SEM photograph indicating a partition wall section. Subsequently, in each observed view field, a maximum straight distance in a void is measured, and an average value of the measured maximum straight distances of all the view fields is the "average maximum image distance".

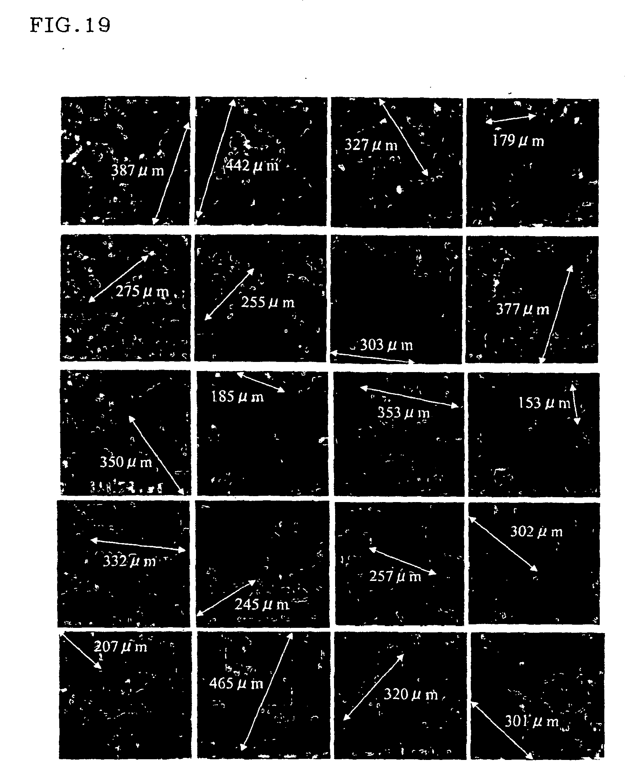

For example, in a plan view shown in FIG. 18 in which a part of a section of the honeycomb structure vertical to an axis is enlarged, a region of t $\times$ t of the partition wall 4 is regarded as one observation region (the view field) v, the SEM photographs are taken from 20 view fields, and images are analyzed. Moreover, as shown in FIG. 19, in the SEM photographs of 20 view fields, the maximum straight distances of the view fields are measured, and an average value is taken. In the SEM photographs of 20 view fields shown in FIG. 19, the maximum straight distances from a left end to a right end of an uppermost stage to a left end to a right end of a lowermost stage are 387 $\mu$m, 442 $\mu$m, 327 $\mu$m, 179 $\mu$m, 275 $\mu$m, 255 $\mu$m, 303 $\mu$m, 377 $\mu$m, 350 $\mu$m, 185 $\mu$m, 353 $\mu$m, 153 $\mu$m, 332 $\mu$m, 245 $\mu$m, 257 $\mu$m, 302 $\mu$m, 207 $\mu$m, 465 $\mu$m, 320 $\mu$m and 301 $\mu$m, respectively. In this case, the average maximum image distance is 301 $\mu$m.

It is to be noted that the SEM photographs shown in FIG. 19 were photographed with a magnification of 50. In the image analysis, commercially available image analysis software is usable. For example, trade name: Paint Shop ProX manufactured by COREL Corporation may be used. The magnification of the SEM photograph may be a magnification with which a clear image is obtained, and an arbitrary magnification may be selected from, for example, 10 to 1000.

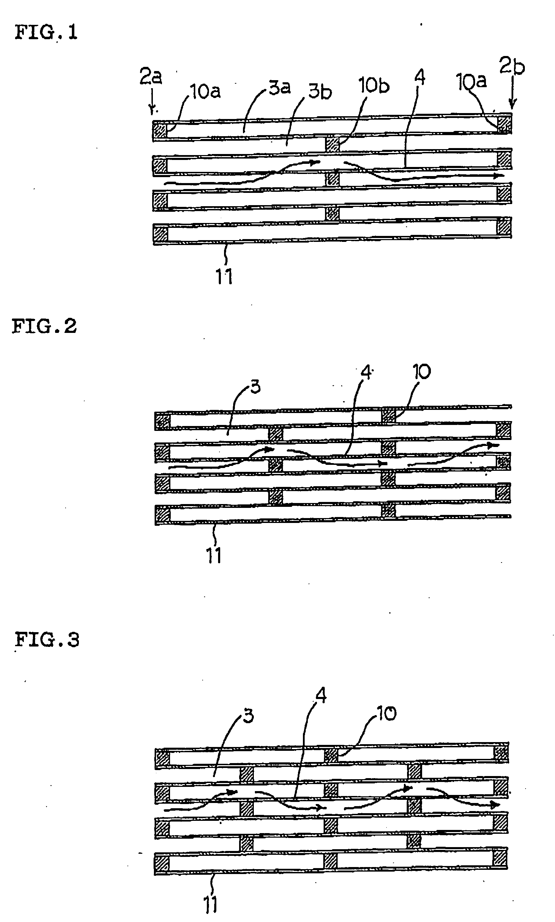

Next, a specific configuration of the honeycomb structure of the present invention will be described with reference to the drawings. FIGS. 1 to 13 are schematic sectional views showing examples of the embodiment of the honeycomb structure according to the present invention. As described above, to allow a fluid such as the exhaust gas to pass through the partition wall twice or more, for example, as shown in FIG. 1, a cell 3a including two or more (two in the present example) arranged plugging portions 10a and a cell 3b disposed adjacent to this cell 3a and including a plugging portion 10b disposed between the plugging portions 10a in the length direction of the cell may alternately be arranged.

When such a cell arrangement pattern is disposed in at least a part of a honeycomb structure 11, at least a part of a fluid which has entered cells from one end portion 2a of the honeycomb structure 11 passes through partition wall 4 twice or more, and is then discharged from the other end portion 2b. As shown in FIG. 1, it is more preferable that such a cell arrangement pattern is disposed in the whole honeycomb structure 11, because all the inflowing fluids pass through the partition wall twice or more.

It is to be noted that it is preferable that, as shown in the example of FIG. 1, in the length direction of the cell, the plugging portion 14b disposed between the plugging portions 10a and 10a is disposed right at an intermediate position between the plugging portions 10a and 10a or a position where a distance from the central position is 30% or less of a distance between the plugging portions 10a and 10a, because a flow of the fluid passing through the partition walls 4 obtains a satisfactory balance.

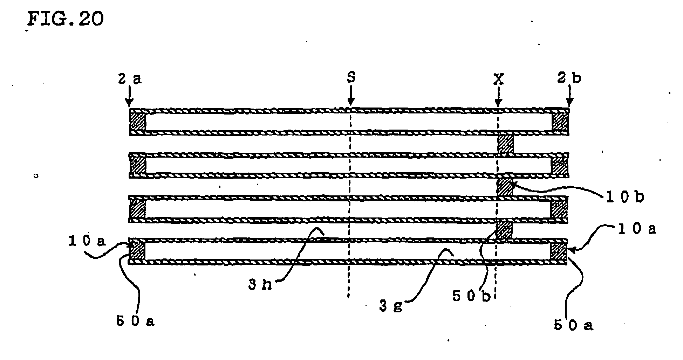

Here, "the distance between the plugging portions" mentioned in the present specification is a distance between externally positioned end surfaces of two plugging portions. The "externally positioned end surface" is an end surface of one of the two plugging portions on a side away from the other plugging portion. The "distance from the center" is a distance from the central position between two plugging portions of one cell to the end surface of the plugging portion of the other cell close to the central position- For example, a honeycomb structure of FIG. 20 is an example in which the plugging portions 10b are arranged so that at a predetermined position X from the center (the central position) S between externally positioned end surfaces 50a and 50a of two plugging portions 10a, 10a of one cell 3g, an end surface 50b of the plugging portion 10b of another cell 3h closer to the center S is positioned.

In an embodiment of FIG. 1, the fluid passes through the partition wall twice. On the other hand, in embodiments of FIGS. 2 and 3, positions where plugging portions 10 are arranged are increased so that the fluid passes through the partition wall 4 three times (FIG. 2) and four times (FIG. 3). When the number of the times when the gas passes through the partition wall is increased in this manner, it is possible to improve the contact efficiency between the exhaust gas and the catalyst in a case where these honeycomb structures 11 are used in the catalyst carriers. It is to be noted that it is preferable to set the positions where the plugging portions are to be arranged in one cell to about four positions at maximum. If five or more plugging portions are arranged in one cell, a pressure loss sometimes excessively increases.

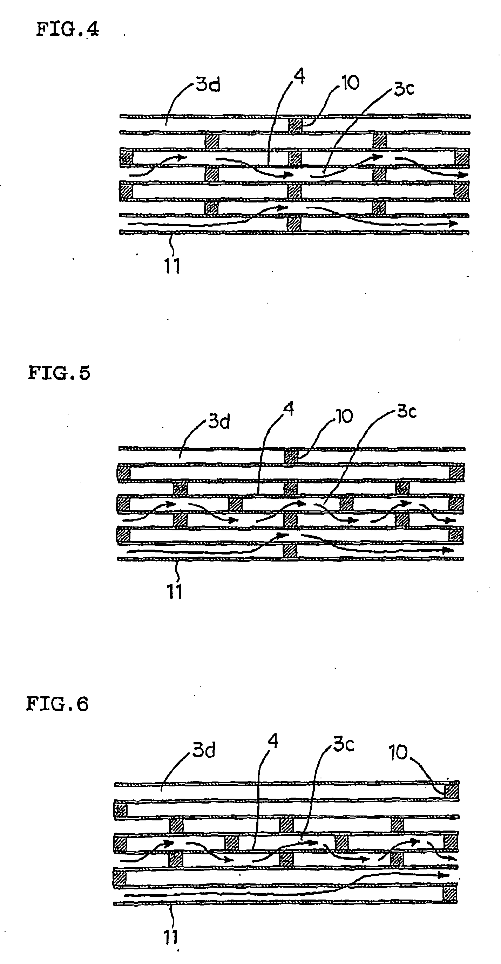

In embodiments shown in FIGS. 4 to 6, the number of positions to arrange plugging portions 10 in a cell 3c positioned at the center of a honeycomb structure 11 in a diametric direction are set to be larger than that of positions to arrange the plugging portions 10 in a cell 3d positioned at an outer peripheral portion. Since a honeycomb catalytic body is usually disposed so that the center of a section of an exhaust tube agrees with that of a section of the honeycomb catalytic body, the exhaust gas tends to more easily enters the central cell than the cell disposed in the vicinity of an outer periphery of the honeycomb catalytic body. Therefore, a catalyst included in a catalytic layer carried on inner surfaces of pores of a central partition wall easily deteriorates thermally or poisonously. When more plugging portions 10 are arranged in the cell 3c positioned at the center of the honeycomb structure 11 in the diametric direction and a pressure loss of the center is set to be larger than that of the outer peripheral portion as in the embodiments shown in FIGS. 4 to 6, a larger amount of the exhaust gas easily enters the outer peripheral portion of the honeycomb structure, the whole flow of the exhaust gas is uniformed, and the above partial catalyst deterioration can be suppressed. It is to be noted that for a reason similar to the above reason, it is preferable to arrange more plugging portions in a cell positioned in the vicinity of an extended line of the center of the section of the exhaust tube than in a cell positioned in another portion, in a case where the honeycomb catalytic body is installed so that the center of the section of the exhaust tube does not agree with that of the section of the honeycomb catalytic body, or a case where the honeycomb catalytic body has an asymmetric section.

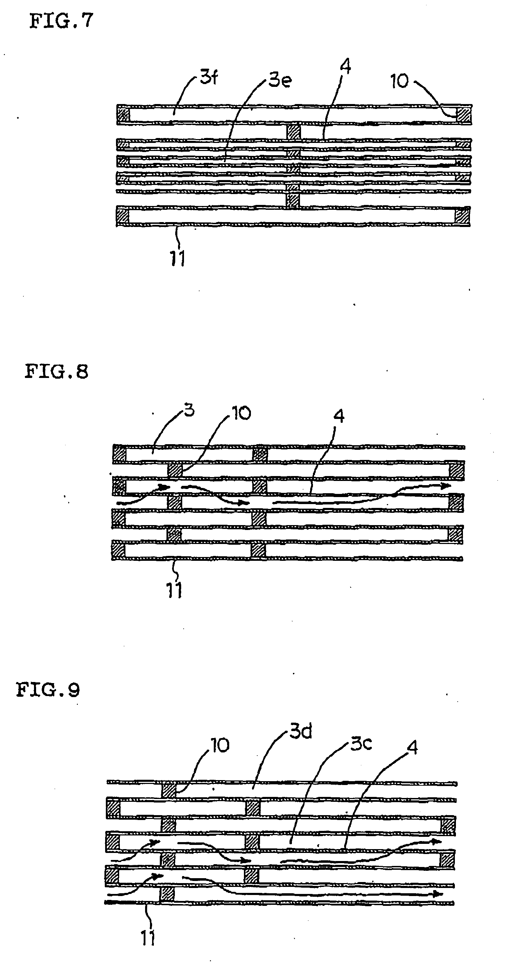

In an embodiment shown in FIG. 7, it is intended that the pressure loss of the center of the honeycomb structure is set to be larger than that of the outer peripheral portion in the same manner as in the embodiments shown in FIGS. 4 to 6. In a technique of setting the pressure loss, a cell density of cells 3e arranged at the center of a honeycomb structure 11 in a diametric direction is set to be higher than that of cells 3f arranged at the outer peripheral portion of the structure. Even according to such a technique, a larger amount of the exhaust gas easily enters the outer peripheral portion, the whole flow of the exhaust gas is uniformed, and the above partial catalyst deterioration can be suppressed.

In an embodiment shown in FIG. 8, when this honeycomb structure 11 is used as a catalyst carrier in a honeycomb catalytic body, more plugging portions 10 are arranged on an upstream side of an exhaust gas flow. At an upstream portion of the honeycomb catalytic body, warm-up is performed faster, but a catalyst easily deteriorates thermally or poisonously as compared with a downstream portion. Therefore, the upstream portion is provided with more plugging portions 10 in this manner to improve the contact efficiency between the exhaust gas and the catalyst at the upstream portion.

An embodiment shown in FIG. 9 is a combination of the techniques of the embodiments shown in FIGS. 4 to 6 and the technique of the embodiment shown in FIG. 8. That is, the number of plugging portions 10 of a cell 3c positioned at the center of a honeycomb structure 11 in a diametric direction is set to be larger than that of plugging portions 10 of a cell 3d positioned at an outer peripheral portion of the structure. Moreover, more plugging portions 10 are arranged at a portion on an upstream side of an exhaust gas flow. In this case, the partial catalyst deterioration can be suppressed, and the contact efficiency between the exhaust gas and the catalyst at the upstream portion can be improved.

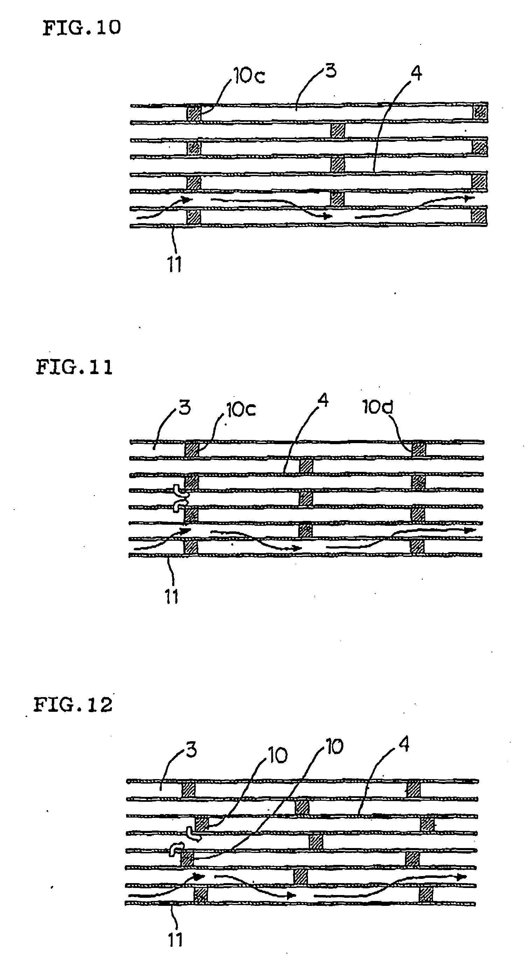

In an embodiment shown in FIG. 10, when this honeycomb structure 11 is used as a catalyst carrier in a honeycomb catalytic body, any plugging portion is not disposed at an end portion of a cell disposed on an upstream side (an inlet side) of an exhaust gas flow, and plugging portions 10c closest to an upstream side are arranged away from end portions of cells 3 to a certain degree. In this case, the pressure loss of an inlet portion decreases, an exhaust gas easily enters the cells, a heat capacity of the inlet portion decreases, and an light-off characteristic improves.

According to an embodiment shown in FIG. 11, in addition to a technique of the embodiment shown in FIG. 10, any plugging portion is not arranged at end portions of cells on a downstream side (an outlet side) of an exhaust gas flow, and plugging portions 10d closest to the downstream side are arranged away from the end portions of cells 3 to a certain degree. In this case, pressure losses of an inlet portion and an outlet portion drop, an exhaust gas enters the cells and are discharged from the cells easily, and heat capacities of the inlet and outlet portions are reduced to improve the light-off characteristic.

According to an embodiment shown in FIG. 12, in addition to the technique of the embodiment shown in FIG. 11, a measure is taken so as to further reduce a pressure loss. Specifically, in the embodiment shown in FIG. 11, the plugging portions are arranged at the same positions in a length direction every other cell. Therefore, as shown by bold arrows in FIG. 11, fluids passed through partition walls 4 enter the same position of the adjacent cell, and the flow is concentrated on the predetermined position. On the other hand, in the embodiment shown in FIG. 12, plugging portions 10 are not arranged at the same positions every other cell 3, and are arranged at regularly or randomly deviating positions. In consequence, as shown by bold arrows in FIG. 12, fluids passed through partition walls 4 enter deviating positions of the adjacent cell, and concentration of the flow on a predetermined position can be relaxed. Therefore, the fluid smoothly flows through the cells, and the pressure loss is further reduced. It is to be noted that an effect similar to this effect may be obtained by changing lengths of plugging portions and allowing positions of tip ends and/or rear ends of the plugging portions to deviate from one another. This method is applicable to the plugging portions present at any position including end portions of cells. A length of the deviation is preferably 0.5 mm or more, further preferably 1 mm or more in an axial direction. In view of a relation between the length and the whole length of the honeycomb structure, the length of the deviation is preferably 0.5 or more, further preferably 1% or more of the whole length.

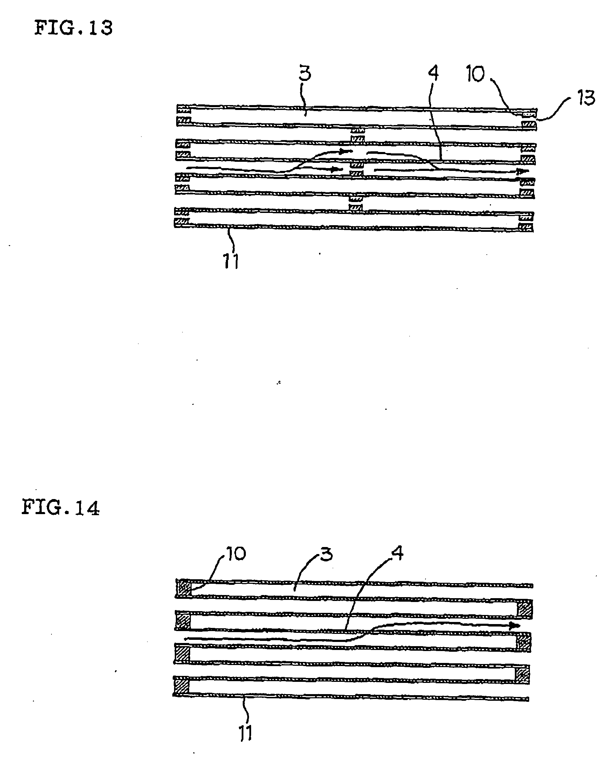

In an embodiment shown in FIG. 13, plugging portions 10 are arranged in the same manner as in the embodiment shown in FIG. 1, but the plugging portions 10 have through holes 13 extending through cells 3 in a length direction. When such a through hole 13 is disposed in at least a part of the plugging portion 10, the pressure loss drops, and a fluid smoothly flows through the cells 3. In this case, it is preferable to set a sectional area of the through hole 13 to 30 to 90% of the sectional area of the cell 3. If the sectional area is less than 30%, an only insufficient effect of reducing the pressure loss is obtained. On the other hand, if the sectional area exceeds 90%, the plugging portion 10 hardly performs a plugging function. Therefore, an amount of the fluid to be passed through a partition wall 4 decreases.

Moreover, in the honeycomb structure of the present invention, a difference of porosity between a portion close to one end surface of the honeycomb structure and a portion close to the other end surface may be set to 5% or more. In a case where such a porosity difference is set, a flow rate of a portion on which the exhaust gas flow is easily concentrated can be balanced with that of a portion on which the flow is not easily concentrated owing to a plugging structure. For example, in a case where the exhaust gas passed through the partition wall is more easily concentrated on a portion close to an end surface of the honeycomb structure on an outlet side than a portion close to an end surface of the structure on an inlet side, the porosity of the portion close to the inlet-side end surface is set to be higher than that of the portion close to the outlet-side end surface, the flow rate of the exhaust gas passed through the partition wall at the portion close to the inlet-side end surface is increased, and the flow rate of the exhaust gas in the whole honeycomb structure is uniformed. Such adjustment of the flow rate balance due to the porosity difference may be applied to a portion other than the portion close to the end surface.

Examples of means for making the difference of the porosity between the portion close to the one end surface of the honeycomb structure and the portion close to the other end surface include a method of coating the only portion close to the one end surface with a thermally resistant inorganic oxide to reduce the porosity of the portion close to the one end surface. Specifically, a method is preferably used in which the only portion close to the one end surface is immersed into an alumina sol, a silica sol, a slurry of fine powder of a honeycomb structure material (e.g., cordierite) or alumina fine powder or the like, a surplus liquid is blown away with compressed air from the other end surface, the honeycomb structure is dried with a drier such as a hot air drier or a box type drier, and finally the structure is thermally treated with an electric furnace and fixed. It is to be noted that, when a sol such as the alumina sol or the silica sol is used, there is an advantage that even fine portions of the pores can homogeneously and easily be coated. On the other hand, when the slurry of the fine powder of the honeycomb structure material is used, there is an advantage that a coefficient of thermal expansion can satisfactorily be matched with that of the honeycomb structure. It is to be noted that both of the sol and the slurry may appropriately be mixed and used.

It is to be noted that in the present specification, the "portion close to the end surface" is a portion having a length of 15% at maximum of the total length of the honeycomb structure, from the end surface of the honeycomb structure, in the length direction of the honeycomb structure. Moreover, it is assumed that a portion of the honeycomb structure excluding this "portion close to the end surface" is "the center portion".

Moreover, the "porosity" mentioned in the present specification is a physical value measured by image analysis. Specifically, assuming that a partition wall thickness is "t", at least five view fields each of length $\times$ breadth = t $\times$ t are observed in an SEM photograph indicating a partition wall section. Subsequently, in each observed view field, a void area ratio is obtained, and an average value of values each obtained by multiplying the ratio by 3/2 in all the view fields is obtained as the "porosity".

A density of the cells (the cell density) of the honeycomb structure of the present invention is preferably 0.25 to 62 cells/cm$^2$ (1.61 to 400 cpsi), further preferably 1.55 to 46.5 cells/cm$^2$ (10 to 300 cpsi), especially preferably 1.55 to 31 cells/cm$^2$ (10 to 200 cpsi). If the cell density is less than 0.25 cells/cm$^2$, the contact efficiency between the exhaust gas and the catalytic layer tends to fall short in a case where the honeycomb structure is used as the catalyst carrier. On the other hand, if the cell density exceeds 62 cells/cm$^2$, the pressure loss tends to increase. It is to be noted that "cpsi" stands for "cells per square inch", and is a unit indicating the number of the cells per square inch, and 10 cpsi is about 1.55 cells/cm$^2$.

The thickness of the partition wall is preferably 0.15 to 7 mm (6 to 280 mil), further preferably 0.25 to 2 mm (10 to 80 mil), especially preferably 0.38 to 1.5 mm (15 to 60 mil). If the thickness of the partition wall is less than 0.15 mm, strength falls short, and a resistance to thermal shock sometimes drops. On the other hand, if the thickness of the partition wall exceeds 7 mm, the pressure loss tends to increase. It is to be noted that 1 mil is 1/1000 inch, that is, about 0.025 mm.

The porosity of the partition wall is preferably 30 to 80%, further preferably 40 to 70%. If the porosity is less than 30%, the flow rate of the exhaust gas passed through the partition wall increases, and a purification performance tends to deteriorate. On the other hand, if the porosity exceeds 80%, the strength tends to become insufficient.

A log base standard deviation (a pore diameter distribution $\sigma$) of the pore diameter distribution of the partition walls is preferably 0.1 to 0.6, further preferably 0.2 to 0.6. If the pore diameter distribution $\sigma$ is less than 0.1, the pressure loss during passage of the exhaust gas through the partition wall tends to increase. It is to be noted that, if the pore diameter distribution $\sigma$ is 0.2 or more, there is an advantage that the pressure loss can be suppressed within an allowable range even during an operation under a large load. On the other hand, if the pore diameter distribution $\sigma$ exceeds 0.6, the gas flows through only large pores. Therefore, the purification performance tends to deteriorate. It is to be noted that, if the distribution is 0.5 or less, there is an advantage that the purification performance does not easily deteriorate even in a case where the exhaust gas selectively flows through the large pores.

As the "pore diameter distribution" in a case where the "log base standard deviation of the pore diameter distribution" is derived, a value measured with a mercury porosimeter is used. Moreover, the log base standard deviation (sd, standard deviation of the following equation (4)) of the resultant pore diameter distribution is obtained using the following equations (1) to (4). It is to be noted that as a differential pore volume denoted with "f" in the following equations (2), (3), for example, assuming that a pore volume of pores having a diameter which is not more than a pore diameter Dp1 (a cumulative value of pore diameters 0 to Dp1) is V1 and a pore volume of pores having a diameter which is not more than a pore diameter Dp2 (a cumulative value of pore diameters 0 to Dp2) is V2, a differential pore volume f2 is a value represented by f2 = V2-V1. In the following equations (1) to (4), "Dp" is a pore diameter ($\mu$m), "f" is a differentia pore volume (mL/g), "x" is a log base of a pore diameter Dp, "xav" is an average value of x, "s$^2$" is a variance of x and "sd" is a standard deviation of x (the log base standard deviation of the pore diameter distribution), respectively. In the following equations, "s" is the pore diameter distribution $\sigma$.

[Eq. 1]

$$x = \log Dp \qquad \cdots (1)$$

$$xav = \sum xf / \sum f \qquad \cdots (2)$$

$$s^2 = \sum x^2 f / \sum f - xav^2 \qquad \cdots (3)$$

$$sd = \sqrt{s^2} \qquad \cdots (4)$$

It is to be noted that, when the cell density is in a range of 0.25 to 62 cells/cm$^2$, the thickness of the partition wall is in a range of 0.15 to 7 mm, the average maximum image distance of the partition walls is in a range of 40 to 3000 $\mu$m, the porosity of the partition wall is in a range of 30 to 80%, and the log base standard deviation of the pore diameter distribution is in a range of 0.1 to 0.6, the honeycomb structure is suitable as a carrier constituting a catalytic body for purifying an exhaust gas discharged from an industrial combustion device (for an industrial purpose).

Moreover, when the cell density is in a range of 1.55 to 12.4 cells/cm$^2$, the thickness of the partition wall is in a range of 0.7 to 1.5 mm, the average maximum image distance of the partition walls is above 40 $\mu$m and 500 $\mu$m or less, the porosity of the partition wall is in a range of 40 to 65%, and the log base standard deviation of the pore diameter distribution is in a range of 0.2 to 0.6, the honeycomb structure is suitable as a carrier constituting a catalytic body (to be mounted on a car) for purifying an exhaust gas discharged from an engine for the car.

Examples of a material constituting the honeycomb structure include a material containing a ceramic as a main component and a sintered metal. When the honeycomb structure is constituted of a material containing the ceramic as the main component, preferable examples of this ceramic include silicon carbide, cordierite, alumina titanate, sialon, mullite, silicon nitride, zirconium phosphate, zirconia, titania, alumina, silica and a combination of them. Especially, a ceramic such as silicon carbide, cordierite, mullite, silicon nitride or alumina is preferable in view of a resistance to alkali. Above all, an oxide-based ceramic is also preferable in view of cost.

A coefficient of thermal expansion of the honeycomb structure at 40 to 800°C in the length direction of the cell is preferably less than $1.0 \times 10^{-6}$/°C, further preferably less than $0.8 \times 10^{-6}$/°C, especially preferably less than $0.5 \times 10^{-6}$/°C. If the coefficient of thermal expansion at 40 to 800°C in the length direction of the cell is less than $1.0 \times 10^{-6}$/°C, a thermal stress generated in a case where the honeycomb structure is exposed to the exhaust gas at a high temperature can be suppressed within an allowable range, and destruction of the honeycomb structure due to the thermal stress can be prevented.

Moreover, it is preferable that a shape of a section of the honeycomb structure obtained by cutting the surface of the structure vertical to the length direction of the cell in the diametric direction is adapted to an inner shape of an exhaust system to be installed. Specific examples of the sectional shape include a circular shape, an oval shape, an racetrack shape, a trapezoidal shape, a triangular shape, a quadrangular shape, a hexagonal shape and a horizontally asymmetric irregular shape. Above all, the circular shape, the elliptic shape and the oblong shape are preferable.

In a case where the honeycomb structure of the present invention is used as the catalyst carrier of the honeycomb catalytic body, unlike a case where the structure is used in the filter, there is not any risk of melting due to combustion heat during regeneration of the filter. Therefore, an excessively large heat capacity does not have to be imparted to the structure. From a viewpoint of improving a warm-up property of the catalyst to promote ignition at an early stage, it is rather preferable to reduce the heat capacity. The heat capacity of the honeycomb structure may be controlled by not only selecting a material of the structure but also increasing or decreasing the thickness of the partition wall, the cell density or the porosity to change the bulk density. When the honeycomb structure of the present invention is used as the catalyst carrier of the honeycomb catalytic body, the bulk density is preferably 0.5 g/cm$^3$ or less, further preferably 0.45 g/cm$^3$ or less, especially preferably 0.4 g/cm$^3$ or less. If the bulk density is 0.4 g/cm$^3$ or less, the honeycomb structure can more preferably be mounted at a position close to an engine where the quick light-off is regarded as important. It is to be noted that the "bulk density of the honeycomb structure" mentioned in the present specification is a mass per unit volume of the honeycomb structure (excluding the plugging portions and an outer wall portion).

A honeycomb catalytic body of the present invention is constituted by carrying a catalyst-containing catalytic layer on at least inner surfaces of pores of partition walls of the honeycomb structure of the present invention described above. Since the honeycomb structure of the present invention is used as the catalyst carrier, this honeycomb catalytic body has advantages such as a high contact efficiency between the exhaust gas and the catalytic layer, a high purification effect exhibited even with a small amount of the catalyst (a noble metal) for use, an excellent durability as the catalyst and a long life. It is to be noted that, when the partition wall has a small pore diameter, the catalytic layer is not always continuously carried on the inner surfaces of the pores, and the layer is sometimes discontinuously carried in the form of a small lump. It is assumed that the "catalytic layer" mentioned in the present invention includes such a discontinuously carried catalytic layer.

In the honeycomb catalytic body of the present invention, an amount of the catalytic layer to be carried per unit volume of the honeycomb structure is preferably 10 to 250 g/liter (L), more preferably 10 to 150 g/L. If the amount is less than 10 g/L, a sufficient catalytic performance is not easily obtained. If the amount exceeds 250 g/L, the pressure loss excessively increases.

The catalytic layer may be carried by a portion other than the inner surface of the pore of the partition wall, for example, the surface of the partition wall and the plugging portion. In this case, the catalytic performance can be improved, and the catalytic layer is easily carried. On the other hand, in respect of the pressure loss, it is preferable that the catalytic layer is mainly carried by the inner surfaces of the pores of the partition walls, and is not carried by the surface of the partition wall and the plugging portion to the utmost. From a viewpoint of suppressing the pressure loss, it is preferable that the catalytic layer carried on the inner surfaces of the pores of the partition walls has a thickness of 50 $\mu$m or less. Furthermore, a thickness of 20 $\mu$m or less is more preferable, because even a bottom portion of the catalytic layer is easily used.

The amount of the catalytic layer to be carried per unit volume of the honeycomb structure is not uniform in the whole honeycomb catalytic body. In the honeycomb catalytic body, it is generally preferable in view of the catalytic performance that more catalysts are present in a portion close to an end surface on an inlet side where an exhaust gas first comes into contact. Therefore, the amount of the catalytic layer to be carried per unit volume of the honeycomb structure is set to be 5% or more larger at a portion close to the other end surface (an inlet-side end surface) than at a portion close to one end surface (an outlet-side end surface) of the honeycomb structure. A large amount of the exhaust gas tends to flow immediately after or before the plugging portion. Therefore, when opposite end portions of the cell are provided with the plugging portions, it is preferable that the amount of the catalytic layer to be carried per unit volume of the honeycomb structure is set to be 5% or more larger at portions close to the opposite end surfaces than at the center of the honeycomb structure in the length direction, so that a large amount of the catalyst is present at the portion immediately after or before the plugging portion to improve the purification performance. Furthermore, in this case, the pressure loss of the portion having the increased amount of the catalytic layer to be carried locally increases to reduce a flow rate of the exhaust gas. Therefore, the flow rate of the exhaust gas at another portion having a less flow rate of the exhaust gas increases. Therefore, it is possible to obtain an effect that the flow rate of the exhaust gas in the whole honeycomb catalytic body is satisfactorily balanced, and the whole partition walls can effectively be used.

To make a difference of the amount of the catalytic layer to be carried per unit volume of the honeycomb structure between the portion of the honeycomb catalytic body close to one end surface and the portion close to the other end surface, the amount of the layer to be carried is gradually increased from one end surface to the other end surface of the honeycomb structure.

When the honeycomb catalytic body is used in, for example, purifying an exhaust gas from a car, it is preferable to use a noble metal as the catalyst to be contained in the catalytic layer. Preferable examples of this noble metal include Pt, Rh, Pd and a combination of them. It is preferable to set a total amount of the noble metal to 0.17 to 7.07 g/L per unit volume of the honeycomb structure.

The noble metal is usually dispersed and carried by particles of the thermally resistant inorganic oxide to coat the inner surfaces of the pores of the honeycomb structure and the like. It is general to use $\gamma Al_2O_3$ in the thermally resistant inorganic oxide, but $\theta Al_2O_3$, $\delta Al_2O_3$, $\alpha Al_2O_3$ or the like may be used. It is preferable from a viewpoint of thermal resistance to use an oxide having a perovskite structure, especially an oxide containing the noble metal. In addition to $Al_2O_3$, zeolite or the like may be used, depending on an application. Moreover, zeolite or the like is preferably used in a state in which a catalytically active component such as the noble metal or a base metal is dispersed and carried. The noble metal may be fixed to a promoter made of $CeO_2$, $ZrO_2$, a composite oxide of them or the like, and then carried on the honeycomb structure. When $Al_2O_3$ is used as described above, it is preferable that a rare earth metal, $SiO_2$, an alkali earth metal or the like is added to improve the thermal resistance.

Moreover, as $Al_2O_3$, an $Al_2O_3$ gel (a xerogel, aerogel, cryogel or the like) prepared by a sol-gel process may preferably be used. In this case, in a process of preparing the gel, the catalyst (the noble metal, $CeO_2$ $ZrO_2$ or the like) may be contained in the gel. Alternatively, after preparing the $Al_2O_3$ gel, the catalyst may be carried by the gel. When the preparation of the honeycomb catalytic body includes a step of bringing the $Al_2O_3$ gel into contact with a liquid such as water, it is preferable to use cryogel having water resistance.

Furthermore, to suppress an increase of pressure loss, the noble metal and/or the promoter may directly be carried by the honeycomb structure (i.e., the catalytic layer may be constituted of the only noble metal (a main catalyst), or the noble metal (the main catalyst) and the promoter only). In this case, the honeycomb structure may be subjected beforehand to a treatment such as surface reforming typified by an acid treatment or an alkali treatment so that the noble metal is easily immobilized.

It is to be noted that in the honeycomb structure of the present invention, a type of the catalyst is not limited to a three-way catalytic body for purifying an exhaust gas of a gasoline engine. The honeycomb structure may preferably be used in an oxidation catalytic body for purifying the exhaust gas of the gasoline engine or a diesel engine, an NOx trap catalytic body, an SCR catalytic body for NOx selective reduction, an NH$_3$ slip catalyst body and the like.

The honeycomb catalytic body of the present invention can be manufactured by carrying the catalyst by the above honeycomb structure by a manufacturing method in conformity to a heretofore known method. Specifically, first a catalyst-containing catalytic slurry is prepared. Subsequently, the inner surfaces of the pores of the honeycomb structure are coated with this catalytic slurry by a method such as a suction process. Subsequently, the honeycomb structure may be dried at room temperature or on heating conditions to manufacture the honeycomb catalytic body of the present invention.

Here, especially a bottle neck portion or a narrow pore is sometimes clogged with the catalyst, depending on a pore diameter or a pore shape, and there is sometimes a problem that the catalyst present in the blocked portion is not effectively used. In such a case, a technique is preferably usable in which the honeycomb structure is precoated with polymer, a carbon slurry, an alumina sol, a silica sol, a slurry of fine powder of a honeycomb structure material (e.g., cordierite) or alumina or the like before carrying the catalyst to thereby selectively fill in a portion which is easily blocked.

The honeycomb catalytic body of the present invention is preferably usable as a catalytic body for purifying an exhaust gas which does not substantially include carbon particulates. Here, "does not substantially include carbon particulates" indicates that a value measured with the Bosch type smoke meter is 0.1% or less.

More specific examples of an application include a catalytic body for purifying the exhaust gas discharged from the gasoline engine and a catalytic body for purifying the exhaust gas discharged from an industrial (stationary) combustion device. The honeycomb catalytic body is also preferably usable as a catalytic body for purifying an exhaust gas from which particulate matters have been removed with a filter such as a DPF on a downstream side of the filter for removing the particulate matters from a dust-containing gas. The honeycomb catalytic body of the present invention may be disposed and used on a downstream side of another catalytic body different from the honeycomb catalytic body of the present invention. For example, when the honeycomb catalytic body is used in purifying the exhaust gas of the car, in a preferable use configuration, a usual honeycomb catalytic body having an excellent warm-up property is disposed on an upstream side, and the honeycomb catalytic body of the present invention having a satisfactory contact efficiency between the exhaust gas and the catalytic layer and an excellent purification performance is disposed on a downstream side. In this case, both of the catalytic bodies may continuously be arranged close to each other. Alternatively, the bodies may separately be arranged so that the former body is mounted close to the engine, and the latter body is mounted under the floor.

[Examples]

The present invention will hereinafter be described in more detail based on examples, but the present invention is not limited to these examples.

Examples 36-39 are not part of the invention.

[Average maximum image distance]: Pore diameters were measured by image analysis, and an average maximum image distance of partition walls of a honeycomb structure was calculated. Specifically, assuming that a partition wall thickness of the honeycomb structure was "t", at least 20 view fields v each of length × breadth = t × t were observed in an SEM photograph indicating a partition wall section. Subsequently, in each observed view field, a maximum straight distance in a void was measured, and an average value of the maximum straight distances measured in all the view fields was obtained as the "average maximum image distance".

[Standard deviation (σ) of pore diameter distribution]: A pore diameter distribution was measured using a mercury porosimeter (trade name: Auto Pore III, model 9405 manufactured by Micromeritics instrument Corporation), and a standard deviation (a pore diameter distribution σ) of the pore diameter distribution was calculated.

[Porosity]: The porosity was measured by image analysis. Specifically, assuming that a partition wall thickness of a honeycomb structure was "t", at least five view fields v each of length × breadth = t × t were observed in an SEM photograph indicating a partition wall section. Subsequently, in each observed view field, a void area ratio was obtained, and an average value of values each obtained by multiplying the ratio by 3/2 in all the view fields was obtained as the "porosity".

(Example 1)

To 100 parts by mass of cordierite forming material prepared by combining a plurality of materials from talc, kaolin, fired kaolin, alumina, aluminum hydroxide and silica to mix the material at a predetermined ratio so that a chemical composition of the material contained 42 to 56 mass% of $SiO_2$, 30 to 45 mass% of $Al_2O_3$ and 12 to 16 mass% of MgO, 12 to 25 parts by mass of graphite and 5 to 15 parts by mass of synthetic resin were added as pore formers. Furthermore, after appropriate amounts of methyl celluloses and surfactant were added, water was added, and the material was kneaded to thereby prepare a clay. After evacuating and deaerating the prepared clay, the clay was extruded to thereby obtain a formed honeycomb body. The resultant formed honeycomb body was dried and then fired in a maximum temperature range of 1400 to 1430°C to thereby obtain a fired honeycomb body. Cells of the resultant fired honeycomb body were filled with a plugging material and fired again so as to have a plugged state as shown in FIG. 1. In consequence, a honeycomb structure was prepared in which an average maximum image distance of partition walls was 60 $\mu$m, a bulk density was 0.41 g/cm$^3$, a diameter was 100 mm, a total length was 127 mm, a partition wall thickness was 300 $\mu$m (12 mil) and a cell density was 31 cells per cm$^2$ (200 cpsi). Among plugging portions, plugging portions arranged in a portion other than an end portion of each cell were formed by inserting an injection-needle-like fine tube into a predetermined position of each cell and introducing the plugging agent via the fine tube. A length of each plugging portion was set to 5 mm. An average maximum image distance of partition walls and a bulk density were adjusted by appropriately adjusting a combination and a mixture ratio of cordierite forming materials, particle diameters of the cordierite forming materials, particle diameters of the pore formers, an amount of the pore former to be added and the like.

A catalytic slurry containing platinum (Pt) and rhodium (Rh) as noble metals and further containing active alumina and ceria as an oxygen storage material was prepared. A coating layer (a catalytic layer) of the catalytic slurry was formed on inner surfaces of the partition walls and inner surfaces of pores of the honeycomb structure prepared as described above by a suction process. Subsequently, after heating and drying this honeycomb structure, the structure was subjected to a thermal treatment at 550°C for one hour to prepare a honeycomb catalytic body. A coating amount of the catalytic slurry per unit volume of the honeycomb structure was set to 60 g/L. Amounts of the noble metals per unit volume of the honeycomb structure were set to 2 g/L of Pt and 0.5 g/L of Rh, and a total was 2.5 g/L.

(Example 2)

A honeycomb catalytic body was prepared in the same manner as in Example 1 except that a plugging agent was charged so as to obtain a plugged state as shown in FIG. 2.

(Example 3)

A honeycomb catalytic body was prepared in the same manner as in Example 1 except that a plugging agent was charged so as to obtain a plugged state as shown in FIG. 3.

(Example 4)

A honeycomb catalytic body was prepared in the same manner as in Example 1 except that a plugging agent was charged so as to obtain a plugged state as shown in FIG. 4.

(Comparative Example 1)

A honeycomb catalytic body was prepared in the same manner as in Example 4 except that an average maximum image distance of partition walls was adjusted into 20 $\mu$m.

(Example 5)

A honeycomb catalytic body was prepared in the same manner as in Example 4 except that an average maximum image distance of partition walls was adjusted into 42 $\mu$m.

(Example 6)

A honeycomb catalytic body was prepared in the same manner as in Example 4 except that an average maximum image distance of partition walls was adjusted into 51 $\mu$m.

(Example 7)

A honeycomb catalytic body was prepared in the same manner as in Example 4 except that an average maximum image distance of partition walls was adjusted into 68 $\mu$m.

(Example 8)

A honeycomb catalytic body was prepared in the same manner as in Example 4 except that an amount of Pt per unit volume of a honeycomb structure was set to 3.2 g/L at a portion having a length which was 1/4 of the total length of the honeycomb structure from an inlet-side end surface of the honeycomb structure in a length direction of the honeycomb structure, and set to 1.6 g/L at a remaining portion.

(Example 9)

A honeycomb catalytic body was prepared in the same manner as in Example 4 except that a coating amount of a catalytic slurry per unit volume of a honeycomb structure was set to 66.7 g/L at a portion having a length which was 1/4 of the total length of the honeycomb structure from each of an inlet-side end surface and an outlet-side end surface of the honeycomb structure in a length direction of the honeycomb structure, and set to 33.3 g/L at a remaining portion.

(Example 10)

A honeycomb catalytic body was prepared in the same manner as in Example 4 except that Pd was used instead of Pt at a portion having a length which was 1/4 of the total length of a honeycomb structure from an inlet-side end surface of the honeycomb structure in a length direction of the honeycomb structure.

(Example 11)

A honeycomb structure was prepared in the same manner as in Example 1 except that a plugging agent was charged so as to obtain a plugged state as shown in FIG. 4. This honeycomb structure was immersed into a solution of platinum chloride and rhodium chloride to introduce the solution into pores of partition walls of the honeycomb structure. After blowing away a surplus solution with compressed air, the structure was dried with hot air, and subsequently subjected to a thermal treatment at an electric furnace at 550°C for one hour to thereby prepare a honeycomb catalytic body. Amounts of noble metals per unit volume of the honeycomb structure were set to 2 g/L of Pt and 0.5 g/L of Rh, and a total was 2.5 g/L.

(Example 12)

A honeycomb structure was prepared in the same manner as in Example 1 except that a plugging agent was charged so as to obtain a plugged state as shown in FIG. 4. This honeycomb structure was immersed into a 1N nitric acid ($HNO_3$) at room temperature for 24 hours. In consequence, a part of cordierite crystals was eluted, and crystal lattice defects were generated. After rinsing, a surplus liquid was blown off with compressed air, and the structure was dried. Subsequently, this honeycomb structure was immersed into a solution of platinum chloride and rhodium chloride to introduce the solution into pores of partition walls of the honeycomb structure and the crystal lattice defects. After blowing away a surplus solution with compressed air, the structure was subjected to a thermal treatment at an electric furnace at 550°C for one hour to thereby prepare a honeycomb catalytic body. Amounts of noble metals per unit volume of the honeycomb structure were set to 2 g/L of Pt and 0.5 g/L of Rh, and a total was 2.5 g/L.

(Example 13)

A honeycomb catalytic body was prepared in the same manner as in Example 4 except that a coating amount of a catalytic slurry per unit volume of a honeycomb structure was set to 200 g/L.

(Example 14)

A honeycomb catalytic body was prepared in the same manner as in Example 4 except that a coating amount of a catalytic slurry per unit volume of a honeycomb structure was set to 150 g/L.

(Example 15)

A honeycomb catalytic body was prepared in the same manner as in Example 4 except that a coating amount of a catalytic slurry per unit volume of a honeycomb structure was set to 100 g/L.

(Example 16)

A honeycomb catalytic body was prepared in the same manner as in Example 4 except that a coating amount of a catalytic slurry per unit volume of a honeycomb structure was set to 30 g/L.

(Example 17)

A honeycomb catalytic body was prepared in the same manner as in Example 4 except that amounts of noble metals per unit volume of the honeycomb structure were set to 1.6 g/L of Pt and 0.4 g/L of Rh, and a total was 2.0 g/L.

(Example 18)

A honeycomb catalytic body was prepared in the same manner as in Example 4 except that a bulk density of a honeycomb structure was adjusted into 0.55 g/cm$^3$.

(Example 19)

A honeycomb catalytic body was prepared in the same manner as in Example 4 except that a bulk density of a honeycomb structure was adjusted into 0.47 g/cm$^3$.

(Example 20)

A honeycomb catalytic body was prepared in the same manner as in Example 4 except that a bulk density of a honeycomb structure was adjusted into 0.35 g/cm$^3$.

(Example 21)

A honeycomb catalytic body was prepared in the same manner as in Example 1 except that a plugging agent was charged so as to obtain a plugged state as shown in FIG. 5.

(Example 27)

A honeycomb catalytic body was prepared in the same manner as in Example 1 except that a plugging agent was charged so as to obtain a plugged state as shown in FIG. 6.

(Example 23)

A honeycomb catalytic body was prepared in the same manner as in Example 1 except that a plugging agent was charged so as to obtain a plugged state as shown in FIG. 7. A cell density was set to 300 cpsi (46.5 cells/cm$^2$) at a portion of the center of a section having a diameter of 50 mm, and 200 cpsi (31 cells/cm$^2$) at another portion.

(Example 24)

A honeycomb catalytic body was prepared in the same manner as in Example 1 except that a plugging agent was charged so as to obtain a plugged state as shown in FIG. 8.

(Example 25)

A honeycomb catalytic body was prepared in the same manner as in Example 1 except that a plugging agent was charged so as to obtain a plugged state as shown in FIG. 9.

(Example 26)

A honeycomb catalytic body was prepared in the same manner as in Example 1 except that a plugging agent was charged so as to obtain a plugged state as shown in FIG. 10.

(Example 27)

A honeycomb catalytic body was prepared in the same manner as in Example 1 except that a plugging agent was charged so as to obtain a plugged state as shown in FIG. 11.

(Example 28)

A honeycomb catalytic body was prepared in the same manner as in Example 1 except that a plugging agent was charged so as to obtain a plugged state as shown in FIG. 12.

(Example 29)

A honeycomb catalytic body was prepared in the same manner as in Example 1 except that a plugging agent was charged so as to obtain a plugged state as shown in FIG. 13. Through holes of plugging portions were formed by passing a fine rod having a needle-like tip end through the charged plugging agent. A sectional area of the through hole was 0.9 mm$^2$, and this corresponded to 40% of a sectional area of each cell.

(Comparative Example 2)

A honeycomb catalytic body was prepared in the same manner as in Example 1 except that plugging portions 4 were formed so as to alternately plug end portions of cells 3 arranged adjacent to each other as shown in FIG. 14.

(Comparative Example 3)

A honeycomb catalytic body was prepared in the same manner as in Comparative Example 2 except that an average maximum image distance of partition walls was adjusted into 20 $\mu$m.

(Comparative Example 4)

A honeycomb catalytic body was prepared in the same manner as in Comparative Example 2 except that a coating amount of a catalytic slurry per unit volume of a honeycomb structure was set to 200 g/L.

(Example 30)

A honeycomb catalytic body was prepared in the same manner as in Example 1 except that plugging portions 10a and 10a of a honeycomb structure were formed at an exhaust gas inlet-side end surface 2a and an exhaust gas outlet-side end surface 2b of one cell 3g and a plugging portion 10b was formed at a position X of 110 mm from the exhaust gas inlet-side end surface 2a in another cell 3h adjacent to this one cell 3g to form a checkered plugging pattern. The plugging portion 10b formed in the other cell 3h was disposed at a position where a distance from the center S between the two plugging portions 10a and 10a of the one cell 3g (X-S: 46.7 mm) was 36.6% (in excess of 30%) of a distance between the plugging portions 10a and 10a (a total length of 127 mm of the honeycomb structure).

(Example 31)

A honeycomb catalytic body was prepared in the same manner as in Example 1 (all cells were provided with plugging portions) except that a total sectional area of cells having through holes (which were not plugged) was 20% of a total sectional area of all cells.

(Example 32)

A honeycomb catalytic body was prepared in the same manner as in Example 1 (all cells were provided with plugging portions) except that a total sectional area of cells having through holes (which were not plugged) was 40% of a total sectional area of all cells.

(Example 33)

A honeycomb catalytic body was prepared in the same manner as in Example 1 (all cells were provided with plugging portions) except that a total sectional area of cells having through holes (which were not plugged) was 95% of a total sectional area of all cells.

(Example 34)

A honeycomb catalytic body was prepared in the same manner as in Example 1 (the whole honeycomb structure had a porosity of 55%) except that before carrying a catalytic layer, a portion of 30 mm from an exhaust gas outlet-side end surface (a portion of 23.6% of a total length of the honeycomb structure from the end surface of the honeycomb structure, hereinafter referred to as "a portion close to the end surface" in the present example in some case) was immersed into "Alumina Sol 520" manufactured by Nissan Chemical Industries, Ltd., compressed air was sent into cells from an exhaust gas inlet side after the immersing to thereby blow away a surplus of "Alumina Sol 520" attached to the portion close to the end surface, and the structure was then dried with a hot air drier at 120°C and thermally treated at an electric furnace at 500°C for one hour to fixed "Alumina Sol 520" at the portion closer to the end surface. In consequence, the portion of 30 mm from the outlet-side end surface (the portion close to the end surface) had a porosity of 45%. On the other hand, a remaining portion (a portion other than the portion close to the end surface of the honeycomb catalytic body) had a porosity of 55%.

(Example 35)

A honeycomb catalytic body was prepared in the same manner as in Example 1 except that an average maximum image distance of partition walls was 112 $\mu$m.

(Example 36)

A honeycomb catalytic body was prepared in the same manner as in Example 1 except that an average maximum image distance of partition walls was 204 $\mu$m.

(Example 37)

A honeycomb catalytic body was prepared in the same manner as in Example 1 except that an average maximum image distance of partition walls was 272 $\mu$m.

(Example 38)

A honeycomb catalytic body was prepared in the same manner as in Example 1 except that an average maximum image distance of partition walls was 333 $\mu$m.

(Example 39)

A honeycomb catalytic body was prepared in the same manner as in Example 1 except that an average maximum image distance of partition walls was 365 $\mu$m.

(Comparative Example 5)

A honeycomb catalytic body was prepared in the same manner as in Comparative Example 2 except that a catalytic slurry was prepared so that amounts of noble metals per unit volume of a honeycomb structure were 4 g/L of Pt and 1 g/L of Rh, and a total of them was 5 g/L.

(Evaluations)

Catalytic performances (steady-state characteristics, light-off characteristics) and pressure losses of the honeycomb catalytic bodies of Examples 1 to 29 and Comparative Examples 1 to 4 prepared as described above were evaluated both initially (before a durability test) and after the durability test, and results were shown in Table 1. It is to be noted that the light-off characteristics of the typical examples and comparative examples only were evaluated.
Catalytic performances (steady-state characteristics (%)) and pressure losses of the honeycomb catalytic bodies of Examples 30 to 39 and Comparative Example 5 were evaluated both initially (before a durability test) and after the durability test, and results were shown in Table 2. Specific evaluation methods are as follows.

[Light-off characteristic]:

The honeycomb catalytic body is set on an exhaust line of an engine bench (four cylinders in series, engine displacement of 1800 cc) on a base. The engine on the base is operated in steady-state condition beforehand. At this time, an exhaust gas is discharged via a bypass line so that the gas does not flow through the honeycomb catalytic body. A valve is switched so as to allow the exhaust gas to flow into the exhaust line on which the honeycomb catalytic body has been set from the bypass line, the exhaust gas (a stoichiometric composition) is passed through the honeycomb catalytic body at room temperature, and profiles of an inlet bed temperature and a conversion with elapse of time were measured. A position where the inlet bed temperature is measured is an inner position of 10 mm from an inlet-side end surface at the center of a section of the honeycomb catalytic body. The purification ratio at a time when 30 seconds have passed after such valve switching is obtained as the light-off characteristic. It is to be noted that to obtain the purification ratio, a concentration of HC in the exhaust gas is measured with an exhaust gas analyzer manufactured by Horiba, Ltd. before and after the honeycomb catalytic body, and the ratio is calculated by the following equation:

$$\text{purification ratio (\%)} = (\text{HC concentration before the honeycomb catalytic body} - \text{HC concentration after the honeycomb catalytic body})/\text{HC concentration before the honeycomb catalytic body} \times 100.$$

[Steady-state characteristic]:

The honeycomb catalytic body is set on an exhaust line of an engine bench (four cylinders in series, engine displacement of 1800 cc). The engine bench is operated in steady state condition, an inlet gas temperature of the catalytic body is operationally controlled at 400°C, and a purification ratio is obtained. A position where the inlet gas temperature is measured is a position of 10 mm from an inlet-side end surface to an upstream side of an exhaust gas flow direction at the center of a section of the honeycomb catalytic body. A method of calculating the purification ratio is similar to that for the light-off characteristic.

[Pressure loss]:

Air was flowed through the honeycomb catalytic body on room temperature conditions at a flow rate of 3.0 m³/min to measure the pressure loss. Assuming that a measurement result of Comparative Example 2 is 100, results are shown with a relative comparison index.

[Durability test]:

The honeycomb catalytic body is set on an exhaust line of an engine (four cylinders in series, engine displacement of 1800 cc) on a base. While a fuel cut mode is introduced, an inlet gas temperature of the honeycomb catalytic body is adjusted at 750°C to continuously operate the engine for 100 hours. A position where the inlet gas temperature is measured is similar to that for the light-off characteristic.

[Table 1]

| | Structure | | | | Catalytic performance | | | | Pressure loss*3 | |
| | | | | | Steady-state characteristic (%) | | Light-off characteristic (%) | | | |
| | | Average maximum distance between images of partition Walls (μm) | Bulk density of honeycomb structure (g/cm$^3$) | Coating amount of catalyst slurry (g/L) *1 | Amount of noble metal (g/L)*2 | Initial | After durability test | Initial | After durability test | Initial | After durability test |
|---|---|---|---|---|---|---|---|---|---|---|---|
| Example 1 | FIG. 1 | 60 | 0.41 | 60 | 2.5 | 92 | 60 | - | - | 120 | 120 |
| Example 2 | FIG. 2 | 60 | 0.41 | 60 | 2.5 | 95 | 70 | - | - | 150 | 150 |
| Example 3 | FIG. 3 | 60 | 0.41 | 60 | 2.5 | 97 | 82 | - | - | 190 | 190 |
| Example 4 | FIG. 4 | 60 | 0.41 | 60 | 2.5 | 97 | 80 | 60 | 46 | 150 | 150 |
| Comparative Example 1 | FIG. 4 | 20 | 0.41 | 60 | 2.5 | 97 | 83 | - | - | 190 | 230 |
| Example 5 | FIG. 4 | 42 | 0.41 | 60 | 2.5 | 97 | 80 | - | - | 170 | 180 |
| Example 6 | FIG. 4 | 51 | 0.41 | 60 | 2.5 | 97 | 80 | - | - | 160 | 160 |
| Example 7 | FIG. 4 | 68 | 0.41 | 60 | 2.5 | 97 | 80 | - | - | 140 | 140 |
| Example 8 | FIG. 4 | 60 | 0.41 | 60 | 2.5 | 98 | 87 | - | - | 150 | 150 |
| Example 9 | FIG. 4 | 60 | 0.41 | 60 | 2.5 | 99 | 90 | - | - | 140 | 140 |
| Example 10 | FIG. 4 | 60 | 0.41 | 60 | 2.5 | 99 | 80 | 64 | 50 | 150 | 150 |
| Example 11 | FIG. 4 | 60 | 0.41 | - | 2.5 | 92 | 72 | - | - | 90 | 90 |
| Example 12 | FIG. 4 | 60 | 0.41 | - | 2.5 | 94 | 77 | - | - | 90 | 90 |
| Example 13 | FIG. 4 | 60 | 0.41 | 200 | 2.5 | 95 | 83 | 50 | 34 | 240 | 250 |
| Example 14 | FIG. 4 | 60 | 0.41 | 150 | 2.5 | 97 | 84 | 54 | 38 | 200 | 200 |
| Example 15 | FIG. 4 | 60 | 0.41 | 100 | 2.5 | 97 | 83 | 59 | 41 | 180 | 180 |
| Example 16 | FIG. 4 | 60 | 0.41 | 30 | 2.5 | 97 | 70 | 66 | 47 | 120 | 120 |
| Example 17 | FIG. 4 | 60 | 0.41 | 60 | 2.0 | 93 | 65 | - | - | 150 | 150 |
| Example 18 | FIG. 4 | 60 | 0.55 | 60 | 2.5 | 95 | 75 | 51 | 31 | 180 | . 180 |

(continued)

| | | Structure Average maximum distance between images of partition Walls ($\mu$m) | Bulk density of honeycomb structure (g/cm$^3$) | Coating amount of catalyst slurry (g/L) *1 | Amount of noble metal (g/L)*2 | Catalytic performance | | | | Pressure loss*3 | |
|---|---|---|---|---|---|---|---|---|---|---|---|
| | | | | | | Steady-state characteristic (%) | | Light-off characteristic (%) | | | |
| | | | | | | Initial | After durability test | Initial | After durability test | Initial | After durability test |
| Example 19 | FIG. 4 | 60 | 0.47 | 60 | 2.5 | 97 | 78 | 55 | 39 | 160 | 160 |
| Example 20 | FIG. 4 | 60 | 0.35 | 60 | 2.5 | 98 | 85 | 67 | 56 | 130 | 130 |
| Example 21 | FIG. 5 | 60 | 0.41 | 60 | 2.5 | 99 | 87 | - | - | 160 | 160 |
| Example 22 | FIG. 6 | 60 | 0.41 | 60 | 2.5 | 98 | 85 | - | - | 140 | 140 |
| Example 23 | FIG. 7 | 60 | 0.41 | 60 | 2.5 | 96 | 66 | - | - | 140 | 140 |
| Example 24 | FIG. 8 | 60 | 0.41 | 60 | 2.5 | 99 | 90 | - | - | 150 | 150 |
| Example 25 | FIG. 9 | 60 | 0.41 | 60 | 2.5 | 98 | 90 | - | - | 140 | 140 |
| Example 26 | FIG. 10 | 60 | 0.41 | 60 | 2.5 | 93 | 65 | 67 | 55 | 130 | 130 |
| Example 27 | FIG. 11 | 60 | 0.41 | 60 | 2.5 | 94 | 65 | 67 | 56 | 120 | 120 |
| Example 28 | FIG. 12 | 60 | 0.41 | 60 | 2.5 | 93 | 66 | 68 | 57 | 110 | 110 |
| Example 29 | FIG. 13 | 60 | 0.41 | 60 | 2.5 | 85 | 55 | 65 | 49 | 100 | 100 |
| Comparative Example 2 | FIG. 14 | 60 | 0.41 | 60 | 2.5 | 80 | 45 | 53 | 25 | 100 | 100 |
| Comparative Example 3 | FIG. 14 | 20 | 0.41 | 60 | 2.5 | 80 | 48 | - | - | 140 | 170 |
| Comparative Example 4 | FIG. 14 | 60 | 0.41 | 200 | 2.5 | 80 | 49 | - | - | 80 | 180 |

*1, *2: Average value of the whole catalytic body
*3: Relative comparison index at a time when the pressure loss of comparative Example 2 is 100

[Table 2]

| | Structure | Position of plugging portion | | | Through hole sectional area/cell sectional area (%) | Amount of noble metal (g/L) | | Average maximum image distance of partition walls ($\mu$m) | Porosity of the whole honeycomb structure (%) | Porosity of partition wall in the portion close to the end surface (%) | Catalytic performance (Steady-state characteristic (%)) | | Pressure loss | |
| | | Distance from the intermediate position between the plugging portions 10a and 19b (mm) | Distance between the plugging portions 10a and 10b (mm) | (%) | | Pt | Rh | | | | Initial | After durability test | Initial | After durability test |
|---|---|---|---|---|---|---|---|---|---|---|---|---|---|---|
| Example 30 | FIG. 20 | 46.5 | 127 | 36.6 | 100 | 2 | 0.5 | 60 | 55 | 55 | 88 | 57 | 130 | 130 |
| Example 31 | FIG. 1 | 0 | 127 | 0 | 20 | 2 | 0.5 | 60 | 55 | 55 | 87 | 56 | 110 | 110 |
| Example 32 | FIG. 1 | 0 | 127 | 0 | 40 | 2 | 0.5 | 60 | 55 | 55 | 85 | 54 | 100 | 100 |
| Example 33 | FIG. 1 | 0 | 127 | 0 | 95 | 2 | 0.5 | 60 | 55 | 55 | 82 | 50 | 70 | 70 |
| Example 34 | FIG. 1 | 0 | 127 | 0 | 100 | 2 | 0.5 | 60 | 55 | 45 | 93 | 63 | 120 | 120 |
| Example 35 | FIG. 1 | 0 | 127 | 0 | 100 | 2 | 0.5 | 112 | 55 | 55 | 91 | 58 | 100 | 100 |
| Example 36 | FIG. 1 | 0 | 127 | 0 | 100 | 2 | 0.5 | 204 | 55 | 55 | 90 | 58 | 90 | 90 |
| Example 37 | FIG. 1 | 0 | 127 | 00 | 100 | 2 | 0.5 | 272 | 55 | 55 | 90 | 56 | 80 | 80 |
| Example 38 | FIG. 1 | 0 | 127 | 0 | 100 | 2 | 0.5 | 333 | 55 | 55 | 88 | 56 | 70 | 70 |
| Example 39 | FIG. 1 | 0 | 127 | 0 | 100 | 2 | 0.5 | 365 | 55 | 55 | 87 | 55 | 70 | 70 |
| Comparative Example 5 | FIG. 14 | - | - | - | 100 | 4 | 1 | 60 | 55 | 55 | 91 | 58 | 120 | 120 |

As in results shown in Tables 1, 2, the honeycomb catalytic bodies of Examples 1 to 39 having a structure in which at least a part of an exhaust gas passed through a partition wall twice or more exhibited a high catalytic performance as compared with the honeycomb catalytic bodies of Comparative Examples 2 to 5 having a structure in which the exhaust gas passed through the partition wall only once. In the honeycomb catalytic bodies of Examples 1 to 39 having an average maximum image distance of partition walls in excess of 40 $\mu$m, a difference was hardly made between an initial pressure loss and a pressure loss after the durability test. On the other hand, in the catalytic bodies of Comparative Examples 1 and 3 in which the average maximum image distance of the partition walls was 40 $\mu$m or less, the pressure loss after the durability test largely increased owing to deposits as compared with the initial pressure loss. It is seen that it is difficult to use the bodies for a long period. As compared with the honeycomb catalytic body of Comparative Example 5, the honeycomb catalytic bodies of Examples 1 to 39 had a half noble metal amount (2.5 g/L as compared with 5 g/L), but exhibited a satisfactory (high) catalytic performance. That is, it could be confirmed that the honeycomb catalytic body had a sufficient purification capability even with a small amount of a catalyst (a noble metal or the like) as compared with the conventional honeycomb catalytic body.

The present invention is preferably usable as a catalytic body or a catalyst carrier of the catalytic body which purifies unpurified components such as CO, HC, $NO_x$, $SO_x$ and the like included in exhaust gases discharged from fixed engines, combustion devices and the like for cars, construction machines and industries.

## Claims

1. A honeycomb catalytic body comprising:

   a honeycomb structure (11) having porous partition walls (4) arranged so as to form a plurality of cells (3) which communicate between two end surfaces of the honeycomb structure and having a large number of pores; and plugging portions (10) arranged so as to plug at least a part of the plurality of cells at any position in a length direction of the cells,
   the catalytic body further having a catalyst containing-layer on at least inner surfaces of the pores of the partition walls (4) ,
   wherein the partition walls have a thickness of 500 $\mu$m or less and the average maximum image distance of the partition walls of the honeycomb structure is in the range of 40 to 150 $\mu$m, wherein to obtain the average maximum image distance at least 20 view fields each of length x breadth = t x t, wherein "t" is a partition wall thickness, are observed in an SEM photograph of a partition wall section, and in each view field a maximum straight distance in a void is measured, and an average value of the measured maximum straight distances of all the view fields is the average maximum image distance, and
   the plugging portions (10) are arranged so that at least a part of the honeycomb structure is constituted by alternately arranging a first cell (3a) including two or more plugging portions and a second cell (3b) disposed adjacent to the first cell and including a plugging portion disposed between the plugging portions of the first cell in the length direction of the cell, such that at least a part of a fluid which has entered the cells from one end surface passes through the partition wall twice or more, and is then discharged from the other end portion
   wherein the amount of the catalytic layer to be carried per unit volume of the honeycomb structure gradually increases from the one end surface toward the other end surface of the honeycomb structure.

2. The honeycomb catalytic body according to claim 1, at least a part of which is constituted by alternately arranging a first cell (3a) including two or more arranged plugging portions and a second cell (3b) disposed adjacent to the first cell and including a plugging portion disposed at an intermediate position between the plugging portions of the first cell in the length direction of the cell or a position where a distance from the intermediate position is 30% or less of a distance between the plugging portions of the first cell.

3. The honeycomb catalytic body according to claim 1 or claim 2, wherein at least a part of the plugging portions (10) have a through hole which extends through the cell in the length direction of the cell; and a sectional area of the through hole is 30 to 90% of that of the cell.

4. The honeycomb catalytic body according to any one of claims 1 to 3, wherein the average maximum image distance of the plugging portions (10) is 200 $\mu$m or more.

5. The honeycomb catalytic body according to any one of claims 1 to 4, wherein a difference of a porosity between a portion close to the one end surface of the honeycomb structure and a portion close to the other end surface is 5% or more.

6. The honeycomb catalytic body according to any one of claims 1 to 5, wherein a bulk density of the honeycomb structure is 0.5 g/cm$^3$ or less.

7. The honeycomb catalytic body according to any one of claims 1 to 6, wherein more plugging portions (10) are arranged in the cell positioned at the central portion of the honeycomb structure in a diametric direction than in the cell positioned at an outer peripheral portion of the honeycomb structure.

8. The honeycomb catalytic body according to any one of claims 1 to 7, wherein an amount of the catalytic layer to be carried per unit volume of the honeycomb structure is in a range of 10 to 250 g/L.

9. The honeycomb catalytic body according to any one of claims 1 to 8, wherein the catalytic layer is also carried by the plugging portions (10).

10. The honeycomb catalytic body according to any one of claims 1 to 9, wherein the amount of the catalytic layer to be carried per unit volume of the honeycomb structure at the portion close to the one end surface of the honeycomb structure is 5% or more larger than that at the portion close to the other end surface of the honeycomb structure.

11. The honeycomb catalytic body according to any one of claims 1 to 9, wherein the amount of the catalytic layer to be carried per unit volume of the honeycomb structure at the portions close to the opposite end surfaces is 5% or more larger than that at the center of the honeycomb structure in the length direction.

12. Use of the honeycomb catalytic body according to any one of claims 1 to 11 as a catalytic body to purify an exhaust gas which does not substantially include any carbon particulate.

13. Use of the honeycomb catalytic body according to any one of claims 1 to 11 as a catalytic body to purify an exhaust gas discharged from a gasoline engine.

14. Use of the honeycomb catalytic body according to any one of claims 1 to 11 as a catalytic body to purify an exhaust gas discharged from an industrial combustion apparatus.

15. Use, in combination, of the honeycomb catalytic body according to any one of claims 1 to 11 and a filter, the catalytic body being used as a catalytic body to purify an exhaust gas from which particulate matters have been removed by the filter, wherein the honeycomb catalytic body is disposed on a downstream side of said filter which removes the particulate matters from a dust-containing gas.

16. Use of the combination of honeycomb catalytic body and filter according to claim 15, wherein the filter is a diesel particulate filter.

17. In combination, the honeycomb catalytic body according to any one of claims 1 to 11 and another catalytic body, the honeycomb catalytic body being disposed on a downstream side of said other catalytic body.

**Patentansprüche**

1. Katalytischer Wabenkörper, der Folgendes umfasst:

   eine Wabenstruktur (11) mit porösen Trennwänden (4), die so angeordnet sind, dass sie eine Vielzahl von Zellen (3) bilden, die zwischen zwei Stirnflächen der Wabenstruktur kommunizieren und eine hohe Anzahl an Poren aufweisen; und
   Verschlussteile (10), die so angeordnet sind, dass sie zumindest einen Teil der Vielzahl von Zellen an jeder beliebigen Position in Längsrichtung der Zellen verschließen,
   wobei der katalytische Körper ferner eine einen Katalysator enthaltende Schicht zumindest auf Innenflächen der Poren der Trennwände (4) aufweist,
   worin die Trennwände eine Dicke von 500 μm oder weniger aufweisen und die durchschnittliche maximale Bildweite der Trennwände der Wabenstruktur im Bereich von 40 bis 150 μm liegt, worin, um die durchschnittliche maximale Bildweite zu erhalten, zumindest je 20 Gesichtsfelder mit Länge x Breite = t x t, worin "t" die Trennwanddicke bezeichnet, in einer REM-Photographie eines Trennwandquerschnitts beobachtet werden, in jedem Gesichtsfeld eine maximale gerade Distanz in einem Hohlraum gemessen wird und der Durchschnittswert der gemessenen maximalen geraden Distanzen in den Gesichtsfeldern die durchschnittliche maximale Bildweite ausmacht, und

die Verschlussteile (10) so angeordnet sind, das zumindest ein Teil der Wabenstruktur durch das abwechselnde Anordnen einer ersten Zelle (3a), die zwei oder mehrere Verschlussteile umfasst, und einer zweiten Zelle (3b) gebildet sind, die benachbart zu der ersten Zelle vorgesehen ist und einen Verschlussteil umfasst, der zwischen den Verschlussteilen der ersten Zelle in Längsrichtung der Zelle vorgesehen ist, sodass zumindest ein Teil eines Fluids, das in die Zellen an einer Stirnfläche eingetreten ist, zweimal oder öfter durch die Trennwand verläuft und dann am anderen Endabschnitt ausgelassen wird,

worin die pro Volumeneinheit der Wabenstruktur zu tragende Menge an katalytischer Schicht von einer Stirnfläche zur anderen Stirnfläche der Wabenstruktur graduell zunimmt.

2. Katalytischer Wabenkörper nach Anspruch 1, wovon zumindest ein Teil durch das abwechselnde Anordnen einer ersten Zelle (3a), die zwei oder mehrere Verschlussteile umfasst, und einer zweiten Zelle (3b) gebildet ist, die benachbart zu der ersten Zelle vorgesehen ist und einen Verschlussteil umfasst, der an einer Zwischenposition zwischen den Verschlussteilen der ersten Zelle in Längsrichtung der Zelle oder an einer Position angeordnet ist, wo die Distanz zur Zwischenposition 30 % oder weniger der Distanz zwischen den Verschlussteilen der ersten Zelle beträgt, vorgesehen ist.

3. Katalytischer Wabenkörper nach Anspruch 1 oder Anspruch 2, worin zumindest ein Teil der Verschlussteile (10) ein Durchgangsloch aufweist, das sich durch die Zelle in Längsrichtung der Zelle erstreckt; und die Querschnittsfläche des Durchgangslochs 30 bis 90 % von jener der Zelle ausmacht.

4. Katalytischer Wabenkörper nach einem der Ansprüche 1 bis 3, worin die durchschnittliche maximale Bildweite der Verschlussteile (10) sich auf 200 $\mu$m oder mehr beläuft.

5. Katalytischer Wabenkörper nach einem der Ansprüche 1 bis 4, worin die Differenz zwischen der Porosität eines Teils nahe der einen Stirnfläche der Wabenstruktur und jener eines Teils nahe der anderen Stirnfläche 5 % oder mehr beträgt.

6. Katalytischer Wabenkörper nach einem der Ansprüche 1 bis 5, worin die Volumsdichte der Wabenstruktur 0,5 g/cm$^3$ oder weniger beträgt.

7. Katalytischer Wabenkörper nach einem der Ansprüche 1 bis 6, worin mehr Verschlussteile (10) in der im zentralen Teil der Wabenstruktur in diametrischer Richtung positionierten Zelle angeordnet sind als in der im äußeren Randabschnitt der Wabenstruktur positionierten Zelle.

8. Katalytischer Wabenkörper nach einem der Ansprüche 1 bis 7, worin die pro Volumeneinheit der Wabenstruktur zu tragende Menge an katalytischer Schicht im Bereich von 10 bis 250 g/l liegt.

9. Katalytischer Wabenkörper nach einem der Ansprüche 1 bis 8, worin die katalytische Schicht auch von den Verschlussteilen (10) getragen wird.

10. Katalytischer Wabenkörper nach einem der Ansprüche 1 bis 9, worin die pro Volumeneinheit der Wabenstruktur zu tragende Menge an katalytischer Schicht an dem nahe der einen Stirnfläche der Wabenstruktur liegenden Abschnitt um 5 % oder mehr höher ist als jene an dem nahe der anderen Stirnfläche der Wabenstruktur liegenden Abschnitt.

11. Katalytischer Wabenkörper nach einem der Ansprüche 1 bis 9, worin die pro Volumeneinheit der Wabenstruktur zu tragende Menge an katalytischer Schicht an den näher an den entgegengesetzten Stirnflächen liegenden Abschnitten um 5 % oder mehr höher ist als jene in der Mitte der Wabenstruktur in Längsrichtung.

12. Verwendung eines katalytischen Wabenkörpers nach einem der Ansprüche 1 bis 11 als katalytischer Körper zum Reinigen eines Abgases, das im Wesentlichen keine Kohlenstoffteilchen umfasst.

13. Verwendung eines katalytischen Wabenkörpers nach einem der Ansprüche 1 bis 11 als katalytischer Körper zum Reinigen eines Abgases, das aus einem Benzinmotor ausgestoßen wurde.

14. Verwendung eines katalytischen Wabenkörpers nach einem der Ansprüche 1 bis 11 als katalytischer Körper zum Reinigen eines Abgases, das aus einer Industrieverbrennungsvorrichtung ausgelassen wurde.

**15.** Verwendung eines katalytischen Wabenkörpers nach einem der Ansprüche 1 bis 11 und eines Filters in Kombination, wobei der katalytische Körper als katalytischer Körper zum Reinigen eines Abgases verwendet wird, aus dem Schwebstoffteilchen mithilfe des Filters entfernt wurden, worin der katalytische Wabenkörper auf der stromabwärts gelegenen Seite des Filters, der die Schwebstoffteilchen aus dem staubhältigen Gas entfernt, angeordnet ist.

**16.** Verwendung einer Kombination aus katalytischem Wabenkörper und Filter nach Anspruch 15, worin der Filter ein Dieselteilchenfilter ist.

**17.** Katalytischer Wabenkörper nach Anspruch 1 bis 11 und ein weiterer katalytischer Körper in Kombination, wobei der katalytische Wabenkörper auf der stromabwärts gelegenen Seite des weiteren katalytischen Körpers angeordnet ist.

**Revendications**

**1.** Corps catalytique en nid d'abeilles comprenant :

une structure en nid d'abeilles (11) comportant des parois de séparation (4) poreuses agencées de manière à former une pluralité de cellules (3) qui communiquent entre deux surfaces d'extrémité de la structure en nid d'abeilles et comportant un grand nombre de pores ; et
des parties d'obturation (10) agencées de manière à obturer au moins une partie de la pluralité de cellules à n'importe quelle position dans une direction de longueur des cellules,
le corps catalytique comportant en outre une couche contenant un catalyseur au moins sur les surfaces internes des pores des parois de séparation (4),
dans lequel les parois de séparation ont une épaisseur de 500 $\mu$m ou moins et la distance d'image maximum moyenne des parois de séparation de la structure en nid d'abeilles est dans la plage de 40 à 150 $\mu$m, dans lequel, pour obtenir la distance d'image maximum moyenne, au moins 20 champs de vue chacun de longueur x largeur = t x t, où « t » est une épaisseur de paroi de séparation, sont observés dans une photographie de microscope électronique à balayage d'une section de paroi de séparation, et, dans chaque champ de vue, une distance en ligne droite maximum dans le vide est mesurée, et une valeur moyenne des distances en ligne droite maximums mesurées de tous les champs de vue est la distance d'image maximum moyenne, et
les parties d'obturation (10) sont agencées de sorte qu'au moins une partie de la structure en nid d'abeilles est constituée en agençant alternativement une première cellule (3a) comprenant deux parties d'obturation ou plus et une deuxième cellule (3b) disposée adjacente à la première cellule et comprenant une partie d'obturation disposée entre les parties d'obturation de la première cellule dans la direction de longueur de la cellule, de sorte qu'au moins une partie d'un fluide qui est entré dans les cellules à partir d'une surface d'extrémité passe à travers la paroi de séparation deux fois ou plus, et soit ensuite déchargée à partir de l'autre partie d'extrémité, dans lequel la quantité de la couche catalytique à supporter par volume unitaire de la structure en nid d'abeilles augmente graduellement de ladite une surface d'extrémité vers l'autre surface d'extrémité de la structure en nid d'abeilles.

**2.** Corps catalytique en nid d'abeilles selon la revendication 1, dont au moins une partie est constituée en agençant alternativement une première cellule (3a) comprenant deux parties d'obturation agencées ou plus et une deuxième cellule (3b) disposée adjacente à la première cellule et comprenant une partie d'obturation disposée à une position intermédiaire entre les parties d'obturation de la première cellule dans la direction de longueur de la cellule ou à une position où une distance par rapport à la position intermédiaire est égale à 30 % ou moins d'une distance entre les parties d'obturation de la première cellule.

**3.** Corps catalytique en nid d'abeilles selon la revendication 1 ou la revendication 2, dans lequel au moins une partie des parties d'obturation (10) comportent un trou traversant qui s'étend à travers la cellule dans la direction de longueur de la cellule ; et une section du trou traversant est égale à 30 à 90 % de celle de la cellule.

**4.** Corps catalytique en nid d'abeilles selon l'une quelconque des revendications 1 à 3, dans lequel la distance d'image maximum moyenne des parties d'obturation (10) est de 200 $\mu$m ou plus.

**5.** Corps catalytique en nid d'abeilles selon l'une quelconque des revendications 1 à 4, dans lequel une différence de porosité entre une partie proche de ladite une surface d'extrémité de la structure en nid d'abeilles et une partie proche de l'autre surface d'extrémité est de 5 % ou plus.

6. Corps catalytique en nid d'abeilles selon l'une quelconque des revendications 1 à 5, dans lequel une masse volumique de la structure en nid d'abeilles est de 0,5 g/cm$^3$ ou moins.

7. Corps catalytique en nid d'abeilles selon l'une quelconque des revendications 1 à 6, dans lequel davantage de parties d'obturation (10) sont agencées dans la cellule positionnée au niveau de la partie centrale de la structure en nid d'abeilles dans une direction de diamètre que dans la cellule positionnée au niveau d'une partie périphérique externe de la structure en nid d'abeilles.

8. Corps catalytique en nid d'abeilles selon l'une quelconque des revendications 1 à 7, dans lequel une quantité de la couche catalytique à supporter par volume unitaire de la structure en nid d'abeilles est dans une plage de 10 à 250 g/L.

9. Corps catalytique en nid d'abeilles selon l'une quelconque des revendications 1 à 8, dans lequel la couche catalytique est également supportée par les parties d'obturation (10).

10. Corps catalytique en nid d'abeilles selon l'une quelconque des revendications 1 à 9, dans lequel la quantité de la couche catalytique à supporter par volume unitaire de la structure en nid d'abeilles au niveau de la partie proche de ladite une surface d'extrémité de la structure en nid d'abeilles est plus grande de 5 % ou plus que celle au niveau de la partie proche de l'autre surface d'extrémité de la structure en nid d'abeilles.

11. Corps catalytique en nid d'abeilles selon l'une quelconque des revendications 1 à 9, dans lequel la quantité de la couche catalytique à supporter par volume unitaire de la structure en nid d'abeilles au niveau des parties proches des surfaces d'extrémité opposées est plus grande de 5 % ou plus que celle au centre de la structure en nid d'abeilles dans la direction de longueur.

12. Utilisation du corps catalytique en nid d'abeilles selon l'une quelconque des revendications 1 à 11 en tant que corps catalytique pour purifier un gaz d'échappement qui ne comprend pas sensiblement de particules de carbone.

13. Utilisation du corps catalytique en nid d'abeilles selon l'une quelconque des revendications 1 à 11 en tant que corps catalytique pour purifier un gaz d'échappement déchargé d'un moteur à essence.

14. Utilisation du corps catalytique en nid d'abeilles selon l'une quelconque des revendications 1 à 11 en tant que corps catalytique pour purifier un gaz d'échappement déchargé d'un appareil de combustion industriel.

15. *Utilisation, en combinaison, du corps catalytique* en nid d'abeilles selon l'une quelconque des revendications 1 à 11 et d'un filtre, le corps catalytique étant utilisé en tant que corps catalytique pour purifier un gaz d'échappement duquel les matières particulaires ont été retirées par le filtre, dans laquelle le corps catalytique en nid d'abeilles est disposé en aval dudit filtre qui retire les matières particulaires d'un gaz contenant des poussières.

16. Utilisation de la combinaison du corps catalytique en nid d'abeilles et du filtre selon la revendication 15, dans laquelle le filtre est un filtre à particules diesel.

17. En combinaison, le corps catalytique en nid d'abeilles selon l'une quelconque des revendications 1 à 11 et un autre corps catalytique, le corps catalytique en nid d'abeilles étant disposé en aval dudit autre corps catalytique.

FIG.1

FIG.2

FIG.3

FIG.4

FIG.5

FIG.6

FIG.7

FIG.8

FIG.9

FIG.10

FIG.11

FIG.12

FIG.13

FIG.14

FIG.15

FIG.16

FIG.17

FIG.18

FIG.19

FIG.20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003033664 A
- JP 2001269585 A
- JP 2005262210 A
- EP 0736503 A